# EUROPEAN PATENT APPLICATION

(11) **EP 4 664 994 A1**
(43) Date of publication of application: **17.12.2025**
(21) Application number: 24766298.4
(22) Date of filing: 28.02.2024
(51) Int. Cl.: H04W 36/08

(54) **COMMUNICATION METHOD AND RELATED APPARATUS**

(30) Priority: 03.03.2023 CN 202310238496
(71) Applicant: Huawei Technologies Co., Ltd., Shenzhen, Guangdong 518129 (CN)
(72) Inventor: HU, Xingxing, Shenzhen, Guangdong 518129 (CN); ZHENG, Lili, Shenzhen, Guangdong 518129 (CN)
(74) Representative: Gill Jennings & Every LLP
(86) International application number: PCT/CN2024/078992
(87) International publication number: WO 2024/183576

(57) **Abstract**

Embodiments of this application provide a communication method and a related apparatus. The method includes: obtaining first information; and selecting, based on the first information, a target cell for cell selection or reselection, where the first information includes a first indication, and the first indication indicates a candidate cell for cell selection or reselection; or the first information includes ephemeris information of a serving cell and ephemeris information of a neighboring cell of the serving cell. According to embodiments of this application, cell selection or reselection efficiency of a terminal device is improved, and a service interruption delay can be shortened.

## Description

This application claims priority to Chinese Patent Application No. 202310238496.5, filed with the China National Intellectual Property Administration on March 3, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A non-terrestrial network (non-terrestrial network, NTN) has advantages of a wide coverage area, a long communication distance, high reliability, high flexibility, a high throughput, and the like, is not affected by a geographical environment, a climate condition, and a natural disaster, and has been widely used in fields such as aviation communication, maritime communication, and military communication.

In the non-terrestrial network, because a non-terrestrial network device (for example, a satellite, an uncrewed aerial vehicle, or a high-altitude platform) in the non-terrestrial network moves at a high speed, a physical coverage area of the non-terrestrial network device changes, and a procedure such as radio resource control (radio resource control, RRC) reestablishment or RRC resume is triggered, causing the terminal device to perform cell selection or reselection. A higher orbit of the non-terrestrial network device indicates a larger coverage area and a longer communication delay. How to improve efficiency of the terminal device in selecting or reselecting a cell associated with the non-terrestrial network device is a to-be-resolved technical problem.

### SUMMARY

Embodiments of this application disclose a communication method and a related apparatus, to improve cell selection or reselection efficiency of a terminal device and shorten a service interruption delay.

According to a first aspect, an embodiment of this application discloses a first communication method. The method is applied to a terminal device. In this embodiment of this application, a function performed by the terminal device may be performed by an apparatus (for example, a chip, a chip system, or a circuit) in the terminal device or an apparatus that can be used together with the terminal device.

The method includes: obtaining first information, and selecting, based on the first information, a target cell for cell selection or reselection. The first information includes a first indication indicating a candidate cell for cell selection or reselection, so that the candidate cell may be preferentially selected for RRC reestablishment or RRC resume. Alternatively, the first information includes ephemeris information of a serving cell and ephemeris information of a neighboring cell of the serving cell, so that the target cell determined based on the ephemeris information is selected for RRC reestablishment or RRC resume. In this way, cell selection or reselection efficiency of the terminal device is improved, and a service interruption delay can be shortened. This solution may be applied to selecting or reselecting, by the terminal device, a cell associated with a non-terrestrial network device.

In some feasible examples, selecting, based on the first information, the target cell for cell selection or reselection includes: determining the candidate cell based on the first information; and when the candidate cell satisfies a first condition, determining that the candidate cell is the target cell. The first condition includes that the candidate cell is detected, or a signal quality value of the candidate cell is greater than or equal to a first threshold. In this way, the candidate cell may be first determined based on the first information, and then whether the candidate cell is the target cell is determined depending on whether the candidate cell satisfies the first condition. When the candidate cell satisfies the first condition, it is determined that the candidate cell is the target cell. Alternatively, when the candidate cell does not satisfy the first condition, another neighboring cell or candidate cell may be selected as the target cell. The target cell is selected based on the first condition, so that a success rate of RRC reestablishment or RRC resume can be improved, helping improve communication quality.

In some feasible examples, the first information is the ephemeris information of the serving cell and the ephemeris information of the neighboring cell of the serving cell. Determining the candidate cell based on the first information includes: determining, based on the ephemeris information of the serving cell, that a first network device to which the serving cell belongs is an ascending orbit non-terrestrial network device or a descending orbit non-terrestrial network device, and determining, based on the ephemeris information of the neighboring cell of the serving cell, that a second network device to which the neighboring cell of the serving cell belongs is an ascending orbit non-terrestrial network device or a descending orbit non-terrestrial network device; and if both the first network device and the second network device are ascending orbit non-terrestrial network devices, or both the first network device and the second network device are descending orbit non-terrestrial network devices, determining that the neighboring cell of the serving cell is the candidate cell.

It may be understood that when both the first network device and the second network device are ascending orbit non-terrestrial network devices, or both the first network device and the second network device are descending orbit non-terrestrial network devices, it may be determined that a control plane interface is capable of being set up between the first network device and the second network device; or when one of the first network device and the second network device is an ascending orbit non-terrestrial network device, and the other is a descending orbit non-terrestrial network device, it may be determined that a control plane interface is incapable of being set up between the first network device and the second network device. Therefore, a neighboring cell of the second network device for which a control plane interface is capable of being set up may be selected as the candidate cell, and the candidate cell may be preferentially selected during cell selection or reselection. This improves the cell selection or reselection efficiency of the terminal device, and shortens the service interruption delay.

In some feasible examples, there is a control plane interface between the candidate cell and the serving cell. In this way, the candidate cell for which there is the control plane interface with the serving cell may be preferentially selected during cell selection or reselection, so that a network device to which the candidate cell belongs may obtain a context of the terminal device from the first network device based on the control plane interface. This improves the success rate of RRC reestablishment or RRC resume, and shortens the service interruption delay.

In some feasible examples, the first information is from the first network device to which the serving cell belongs, or is predefined or preconfigured. Predefined content is usually defined in a protocol. Preconfigured content may be preconfigured by a network side for the terminal, and may be changed by using a system information block (system information block, SIB) or RRC signaling; or may be preconfigured by the terminal device.

In some feasible examples, the first indication includes at least one of the following: a first cell list, a second cell list, frequency information of the candidate cell, and indication information indicating whether there is a control plane interface between a neighboring cell of the serving cell and the serving cell. The first cell list includes the candidate cell. The second cell list includes a neighboring cell of the serving cell other than the candidate cell. In this way, the candidate cell may be determined based on the foregoing information.

In some feasible examples, the method further includes: sending second information to the first network device to which the serving cell belongs. The second information includes a second indication, and the second indication indicates a device type or a network type of the first network device and a device type or a network type of the second network device to which the neighboring cell of the serving cell belongs, or the second indication indicates a network type or a type group of the serving cell and a network type or a type group of the neighboring cell. Alternatively, the second information includes the ephemeris information of the neighboring cell of the serving cell.

It may be understood that after receiving the second information, the first network device may determine, based on the second information, whether the control plane interface is capable of being set up between the first network device and the second network device. When the control plane interface is capable of being set up between the first network device and the second network device, a transport network layer (transport network layer, TNL) information obtaining request may be sent to the second network device, to obtain TNL information of the neighboring cell, helping complete a step of setting up the control plane interface; or when the control plane interface is incapable of being set up between the first network device and the second network device, a step of obtaining TNL information may not be performed, avoiding an unnecessary control plane interface setup procedure, and reducing signaling interaction between the network devices.

In some feasible examples, the method further includes: receiving a measurement configuration from the first network device, where the measurement configuration indicates to report the second information. In this way, the second information may be reported after the measurement configuration is received, so that signaling overheads can be reduced.

In some feasible examples, the measurement configuration further indicates to report a global cell identifier of the neighboring cell of the serving cell.

According to a second aspect, an embodiment of this application discloses a second communication method. The method is applied to a network device. In this embodiment of this application, a function performed by the network device may be performed by an apparatus (for example, a chip, a chip system, or a circuit) in the network device or an apparatus that can be used together with the network device. The following uses a first network device as an example for description.

The method includes: determining first information; and sending the first information to a terminal device. The first information includes a first indication indicating a candidate cell for cell selection or reselection. Alternatively, the first information includes ephemeris information of a serving cell and ephemeris information of a neighboring cell of the serving cell. The serving cell belongs to the first network device.

In some feasible examples, the method further includes: performing RRC reestablishment or RRC resume with the terminal device and a third network device. A target cell in the third network device is a cell selected by the terminal device based on the first information.

In some feasible examples, there is a control plane interface between the candidate cell and the serving cell.

In some feasible examples, the first indication includes at least one of the following: a first cell list, a second cell list, frequency information of the candidate cell, and indication information indicating whether there is a control plane interface between a neighboring cell of the serving cell and the serving cell. The first cell list includes the candidate cell. The second cell list includes a neighboring cell of the serving cell other than the candidate cell.

In some feasible examples, the method further includes: receiving second information from the terminal device, where the second information includes a second indication, and the second indication indicates a device type or a network type of the first network device and a device type or a network type of a second network device to which the neighboring cell of the serving cell belongs, or the second indication indicates a network type or a type group of the serving cell and a network type or a type group of the neighboring cell; or the second information includes the ephemeris information of the neighboring cell of the serving cell; determining, based on the second information, that a control plane interface is capable of being set up between the first network device and the second network device; and sending a TNL information obtaining request to the second network device.

Optionally, when the second information includes the ephemeris information of the neighboring cell of the serving cell, the method further includes: determining, based on the ephemeris information of the neighboring cell of the serving cell and the ephemeris information of the serving cell, whether both the first network device and the second network device are ascending orbit non-terrestrial network devices or descending orbit non-terrestrial network devices.

In some feasible examples, the method further includes: sending a measurement configuration to the terminal device, where the measurement configuration indicates to report the second information.

In some feasible examples, the measurement configuration further indicates to report a global cell identifier of the neighboring cell of the serving cell.

It should be understood that specific content of the second aspect corresponds to the content of the first aspect. For corresponding features of the second aspect and achieved beneficial effects, refer to the descriptions of the first aspect. To avoid repetition, detailed descriptions are appropriately omitted herein.

According to a third aspect, an embodiment of this application discloses a third communication method. The method is applied to a terminal device. In this embodiment of this application, a function performed by the terminal device may be performed by an apparatus in the terminal device or an apparatus that can be used together with the terminal device.

The method includes: sending second information to a first network device. The second information includes a second indication, and the second indication indicates a device type or a network type of the first network device to which a serving cell belongs and a device type or a network type of a second network device to which a neighboring cell of the serving cell belongs, or the second indication indicates a network type or a type group of a serving cell and a network type or a type group of a neighboring cell. Alternatively, the second information includes ephemeris information of a neighboring cell of a serving cell. Therefore, the first network device may determine, based on the second information, whether a control plane interface is capable of being set up between the first network device and the second network device.

In some feasible examples, a measurement configuration is received from the first network device, where the measurement configuration indicates to report the second information.

In some feasible examples, the measurement configuration further indicates to report a global cell identifier of the neighboring cell of the serving cell.

According to a fourth aspect, an embodiment of this application discloses a fourth communication method. The method is applied to a network device. In this embodiment of this application, a function performed by the network device may be performed by an apparatus in the network device or an apparatus that can be used together with the network device. The following uses a first network device as an example for description.

The method includes: receiving second information from a terminal device; determining, based on the second information, that a control plane interface is capable of being set up between the first network device and a second network device; and sending a TNL information obtaining request to the second network device. The second information includes a second indication, and the second indication indicates a device type or a network type of the first network device and a device type or a network type of the second network device to which a neighboring cell of a serving cell belongs, or the second indication indicates a network type or a type group of a serving cell and a network type or a type group of a neighboring cell. Alternatively, the second information includes ephemeris information of a neighboring cell of a serving cell. The serving cell belongs to the first network device.

Optionally, when the second information includes the ephemeris information of the neighboring cell of the serving cell, the method further includes: determining, based on the ephemeris information of the neighboring cell of the serving cell and ephemeris information of the serving cell, whether both the first network device and the second network device are ascending orbit non-terrestrial network devices or descending orbit non-terrestrial network devices.

In some feasible examples, the method further includes: sending a measurement configuration to the terminal device, where the measurement configuration indicates to report the second information.

In some feasible examples, the measurement configuration further indicates to report a global cell identifier of the neighboring cell of the serving cell.

It should be understood that the content of the first aspect includes the content of the third aspect, and the content of the second aspect includes the content of the fourth aspect. To avoid repetition, detailed descriptions are appropriately omitted herein.

According to a fifth aspect, an embodiment of this application discloses a fifth communication method. The method is applied to a network device. In this embodiment of this application, a function performed by the network device may be performed by an apparatus in the network device or an apparatus that can be used together with the network device. The following uses a first network device to which a serving cell belongs as an example for description.

The method includes: sending third information to a second network device to which a neighboring cell of the serving cell belongs, where the third information includes a TNL information obtaining request and ephemeris information of the serving cell; and receiving TNL information from the second network device, so that the second network device determines, based on the ephemeris information of the serving cell and ephemeris information of the neighboring cell of the serving cell, that both the first network device and the second network device are ascending orbit non-terrestrial network devices or both the first network device and the second network device are descending orbit non-terrestrial network devices.

Alternatively, the method includes: sending a TNL information obtaining request to a second network device to which a neighboring cell of the serving cell belongs; receiving ephemeris information and TNL information from the second network device; and determining, based on ephemeris information of the serving cell and ephemeris information of the neighboring cell of the serving cell, that both the first network device and the second network device are ascending orbit non-terrestrial network devices or both the first network device and the second network device are descending orbit non-terrestrial network devices.

In this way, the first network device or the second network device may determine whether a control plane interface is capable of being set up between the first network device and the second network device. First determining whether a control plane interface is capable of being set up between two network devices before the control plane interface is set up between the network devices can avoid an unnecessary control plane interface setup procedure and reduce signaling interaction between the network devices.

According to a sixth aspect, an embodiment of this application discloses a sixth communication method. The method is applied to a network device. In this embodiment of this application, a function performed by the network device may be performed by an apparatus in the network device or an apparatus that can be used together with the network device. The following uses a second network device to which a neighboring cell of a serving cell belongs as an example for description.

The method includes: receiving third information from a first network device to which the serving cell belongs, where the third information includes a TNL information obtaining request and ephemeris information of the serving cell; determining, based on the ephemeris information of the serving cell and ephemeris information of the neighboring cell of the serving cell, that both the first network device and the second network device are ascending orbit non-terrestrial network devices or both the first network device and the second network device are descending orbit non-terrestrial network devices; and sending TNL information of the second network device to the first network device.

Alternatively, the method includes: receiving a TNL information obtaining request from a first network device to which the serving cell belongs; and sending ephemeris information and TNL information of the second network device to the first network device.

It should be understood that specific content of the sixth aspect corresponds to the content of the fifth aspect. For corresponding features of the sixth aspect and achieved beneficial effects, refer to the descriptions of the fifth aspect. To avoid repetition, detailed descriptions are appropriately omitted herein.

According to a seventh aspect, an embodiment of this application discloses a communication apparatus. The apparatus is used in a terminal device. In this embodiment of this application, a function performed by the terminal device may be performed by an apparatus in the terminal device or an apparatus that can be used together with the terminal device. The apparatus has a function of implementing any example of the first aspect or the third aspect. The function may be implemented by hardware, or may be implemented by hardware executing corresponding software. The hardware or the software includes one or more modules corresponding to the function.

According to an eighth aspect, an embodiment of this application discloses a communication apparatus. The apparatus is used in a network device. In this embodiment of this application, a function performed by the network device may be performed by an apparatus in the network device or an apparatus that can be used together with the network device. The apparatus has a function of implementing any example of the second aspect, the fourth aspect, the fifth aspect, or the sixth aspect. The function may be implemented by hardware, or may be implemented by hardware executing corresponding software. The hardware or the software includes one or more modules corresponding to the function.

According to a ninth aspect, an embodiment of this application provides a communication apparatus, including units, modules, or means (means) configured to perform the steps of any implementation method in the first aspect to the fourth aspect.

According to a tenth aspect, an embodiment of this application provides a communication apparatus. The communication apparatus may be a terminal device or a network device. The communication apparatus may include a processor. The processor is configured to enable, by executing instructions in a memory or by using a logic circuit, the communication apparatus to perform the method in any one of the foregoing aspects or possible examples.

In some feasible examples, the communication apparatus further includes one or more of the memory or a transceiver. The transceiver is configured to send and receive data and/or signaling.

According to an eleventh aspect, an embodiment of this application provides a communication system. The communication system includes a terminal device and a network device. The terminal device and the network device, when running in the communication system, are configured to perform the method in any one of the foregoing aspects or possible examples.

According to a twelfth aspect, this application provides a communication system. The communication system includes a first network device and a second network device. The first network device and the second network device, when running in the communication system, are configured to perform the method performed by the first network device and the second network device in any one of the foregoing aspects or possible examples.

According to a thirteenth aspect, an embodiment of this application provides a computer-readable storage medium. The computer-readable storage medium stores instructions. When the instructions are run by a processor, the method in any one of the foregoing aspects or possible examples is performed.

According to a fourteenth aspect, an embodiment of this application provides a computer program product. The computer program product includes instructions. When the instructions are run by a processor, the method in any one of the foregoing aspects or possible examples is performed.

According to a fifteenth aspect, this application provides a chip, including a processor, configured to invoke, from a memory, and run instructions stored in the memory, so that a communication apparatus on which the chip is installed performs the method in any one of the foregoing aspects or possible examples.

According to a sixteenth aspect, this application provides another chip, including an input interface, an output interface, and a processing circuit. The input interface, the output interface, and the circuit are connected by using an internal connection path. The processing circuit is configured to perform the method in any one of the foregoing aspects or possible examples. Optionally, the chip further includes a memory. The input interface, the output interface, a processor, and the memory are connected by using the internal connection path. The processor is configured to execute code in the memory. When the code is executed, the processor is configured to perform the method in any one of the foregoing aspects or possible examples.

According to a seventeenth aspect, this application provides a chip system, including at least one processor and a communication interface. The communication interface and the at least one processor are interconnected by using a line. The at least one processor is configured to run a computer program or instructions, to perform the method in any one of the foregoing aspects or possible examples.

It should be understood that for implementations and beneficial effects of the foregoing plurality of aspects, refer to each other.

### BRIEF DESCRIPTION OF DRAWINGS

The following describes accompanying drawings used in embodiments of this application.
FIG. 1A to FIG. 1E are diagrams of an architecture of a communication system according to an embodiment of this application;
FIG. 2 is a schematic flowchart of obtaining a TNL address according to an embodiment of this application;
FIG. 3A is a diagram of orbit information represented in a Keplerian orbit format according to an embodiment of this application;
FIG. 3B is a diagram of orbit information represented by a state vector according to an embodiment of this application;
FIG. 4 is a diagram of interaction in an RRC reestablishment procedure according to an embodiment of this application;
FIG. 5 is a diagram of interaction in another RRC reestablishment procedure according to an embodiment of this application;
FIG. 6 is a diagram of interaction in an RRC resume procedure according to this application;
FIG. 7 is a diagram of interaction in another RRC resume procedure according to this application;
FIG. 8 is a diagram of interaction in a communication method according to an embodiment of this application;
FIG. 9 is a diagram of interaction in another communication method according to an embodiment of this application;
FIG. 10 is a diagram of interaction in another communication method according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of a terminal device according to an embodiment of this application.

### DESCRIPTION OF EMBODIMENTS

The technical solutions provided in embodiments of this application may be applied to various communication systems, for example, an NTN system, a long term evolution (long term evolution, LTE) system, a new radio (new radio, NR) system, a public land mobile network (public land mobile network, PLMN) system, a long term evolution advanced (LTE advanced, LTE-A) system, a device-to-device (device-to-device, D2D) communication system, a machine-to-machine (machine-to-machine, M2M) communication system, an internet of things (internet of things, IoT), a narrowband internet of things (narrowband internet of things, NB-IoT), an integrated sensing and communication system, a frequency division duplex (frequency division duplex, FDD) system, a time division duplex (time division duplex, TDD) system, a wireless screen mirroring communication system, an integrated access and backhaul (integrated access and backhaul, IAB) communication system, a communication system (for example, a 6G communication system) evolved after a 5G communication system, a non-3rd generation partnership project (3rd generation partnership project, 3GPP) communication system, or a system integrated with an NTN and another network. This is not limited herein.

Compared with a terrestrial network, the NTN system has advantages of a wide coverage area, a long communication distance, high reliability, high flexibility, a high throughput, and the like, is free from impact of a geographical environment, a climate condition, and a natural disaster, and has been widely used in fields such as aviation communication, maritime communication, and military communication.

Anon-terrestrial network device in the NTN system may be configured to communicate with one or more terminal devices. The non-terrestrial network device may include a satellite (satellite), a high-altitude platform (high-altitude platform, HAP), an uncrewed aerial vehicle, a hot air balloon, a low-earth orbit satellite, a medium-earth orbit satellite, a high-earth orbit satellite, and the like. This is not limited herein.

The satellite mentioned in this application represents a set of satellites related to satellite communication and other network devices. Therefore, in this application, descriptions of "satellite" and "satellite network device" are equivalent. A network device in this application includes the foregoing non-terrestrial network device, and may further include an access network device, a core network device, a data network (data network) device, and the like. It should be understood that a non-terrestrial network device in an NTN is a network device deployed in the air. In some feasible examples, the non-terrestrial network device and the access network device may be separately deployed, or the non-terrestrial network device is deployed as the access network device. The access network device may be deployed in the air, may be deployed on land (for example, an indoor device, an outdoor device, a handheld device, or an in-vehicle device), or may be deployed on water. The core network device, the data network device, and the like may be deployed on land or water. A network device that is not deployed in the air may be collectively referred to as a terrestrial network device. Compared with the terrestrial network device, the non-terrestrial network device is a network device that moves at a high speed. Compared with the non-terrestrial network device, the terrestrial network device is a network device that is stationary or moves at a low speed.

The access network device is an entity configured to transmit or receive a signal, and is mainly configured to implement functions such as a radio physical control function, resource scheduling and radio resource management, radio access control, and mobility management, and provide a reliable radio transmission protocol, a reliable data encryption protocol, and the like. The access network device may support wired access, and may further support wireless access.

Optionally, the access network device may be an access network (access network, AN)/radio access network (radio access network, RAN) device, and includes a plurality of AN/RAN nodes. The AN/RAN node may include but is not limited to: an access point (access point, AP), an enhanced NodeB (enhanced NodeB, eNB), a home base station (for example, a home evolved NodeB, or a home NodeB, HNB), a baseband unit (baseband unit, BBU), a next generation base station (NR NodeB, gNB), a transmission reception point (transmission reception point, TRP), a transmission point (transmission point, TP), or another access node, for example, a wireless relay node or a wireless backhaul node. Alternatively, the AN/RAN node may be an antenna panel including one or more antenna units, may be a network node included in a gNB or a transmission point, for example, a BBU or a distributed unit (distributed unit, DU), or may be a device that undertakes a base station function in a communication system such as D2D, vehicle-to-everything (vehicle-to-everything, V2X), and M2M, or the like. Alternatively, the AN/RAN node may be a radio controller in a cloud radio access network (cloud radio access network, CRAN) scenario, may be an open access network (open RAN, O-RAN or ORAN), may be a base station in the communication system evolved after the 5G communication system, for example, an xNodeB in the 6G communication system, or may be an access network device or the like in a PLMN evolved after the 5G communication system. This is not limited herein.

A main function of the access network device includes at least one of radio resource management, internet protocol (internet protocol, IP) header compression and user data stream encryption, mobility management entity (mobility management entity, MME) selection during attachment of user equipment, routing of user plane data to a user plane device (for example, a service gateway (service gateway, SGW)) of a core network, paging message organization and sending, broadcast message organization and sending, a measurement for a purpose of mobility or scheduling, a configuration of a measurement report, and the like.

In a network structure, the access network device may include a central unit (central unit, CU), a distributed unit (distributed unit, DU), or a RAN device including a CU and a DU. The RAN device including the CU and the DU separates RAN protocol layers. Functions of some protocol layers are controlled by the CU in a centralized manner. Functions of some or all remaining protocol layers are distributed in the DU, and the CU controls the DU in a centralized manner. Further, the CU may be further divided into a CU-control plane (CU-control plane, CU-CP), a CU-user plane (CU-user plane, CU-UP), an antenna unit (radio unit, RU), or the like.

The CU-CP is responsible for a control plane function, mainly including RRC and a packet data convergence protocol (packet data convergence protocol, PDCP) corresponding to a control plane, that is, a PDCP-C. The CU-UP is responsible for a user plane function, mainly including a service data mapping protocol (service data adaptation protocol, SDAP) and a PDCP corresponding to a user plane, that is, a PDCP-U. In a possible manner, an RRC layer, a SDAP layer, and a PDCP layer are deployed on the CU, and a remaining radio link control (radio link control, RLC) layer, media access control (media access control, MAC) layer, and physical (physical, PHY) layer are deployed on the DU. One CU may be connected to one DU, or one CU may be connected to a plurality of DUs. In other words, the access network device may include one CU and one or more DUs. The CU and the DU are connected through an F1 interface, to transmit configuration information of a radio bearer between the CU and the DU.

The CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, and a person skilled in the art may understand meanings thereof. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The core network device is a device in a core network (core network, CN) that provides service support for the terminal device. The core network device may include one or more core network elements. A 5G core network is used as an example. The 5G core network includes an access and mobility management function (access and mobility management function, AMF) network element responsible for mobility management, access management, and other services, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined to implement some control functions. For example, the AMF, the SMF, and the PCF may be combined to serve as a core network device. The core network element may also be referred to as a core network entity or a functional entity.

The data network device is configured to provide a service for a user. Generally, a client is a terminal device, and a server is a data network device. A data network provided by the data network device may be a private network like a local area network. The data network may alternatively include an external network that is not managed by an operator, for example, the Internet. The data network may alternatively include a dedicated network jointly deployed by operators, for example, a network that provides an IP multimedia subsystem (IP multimedia subsystem, IMS) service.

The terminal device in this application is an entity configured on a user side to receive or transmit a signal, and may communicate with one or more core networks by using a RAN. The terminal device may also be referred to as a terminal, user equipment (user equipment, UE), a mobile station, a mobile terminal, or the like. The terminal device may be used in various communication scenarios, for example, D2D communication, V2X communication, machine type communication (machine type communication, MTC), an internet of things (internet of things, IoT), virtual reality (virtual reality, VR), augmented reality (augmented reality, AR), industrial control (industrial control), self driving (self driving), telemedicine (telemedical), a smart grid (smart grid), smart furniture, a smart office, a smart wearable, smart transportation, and a smart city (smart city). The terminal device may be a mobile phone (mobile phone), a tablet computer (pad), a computer with a wireless transceiver function, a wearable device, an aerospace device, an uncrewed aerial vehicle device, or the like. In embodiments of this application, a chip used in the foregoing device may also be referred to as a terminal device.

Communication between a terminal device and a network device, between network devices, and between terminal devices may be performed by using a licensed spectrum (licensed spectrum), may be performed by using an unlicensed spectrum (unlicensed spectrum), or may be performed by using both a licensed spectrum and an unlicensed spectrum. A spectrum resource (or a frequency domain resource) used by the terminal device and the network device is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which may also be referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). Various storage media described herein may represent one or more devices and/or other machine-readable media for storing information. The term "machine-readable medium" may include but is not limited to a radio channel, and various other media that can store, contain, and/or carry an instruction and/or data.

The following describes embodiments of this application with reference to the accompanying drawings in embodiments of this application.

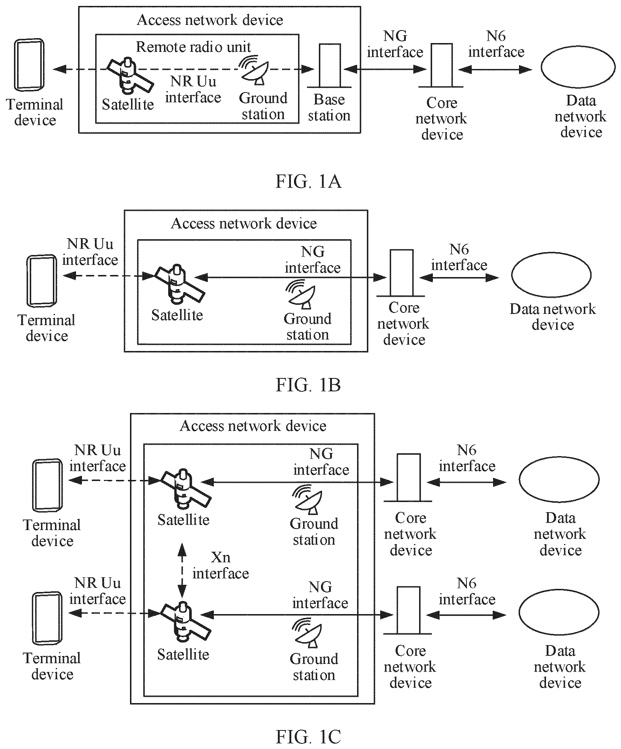

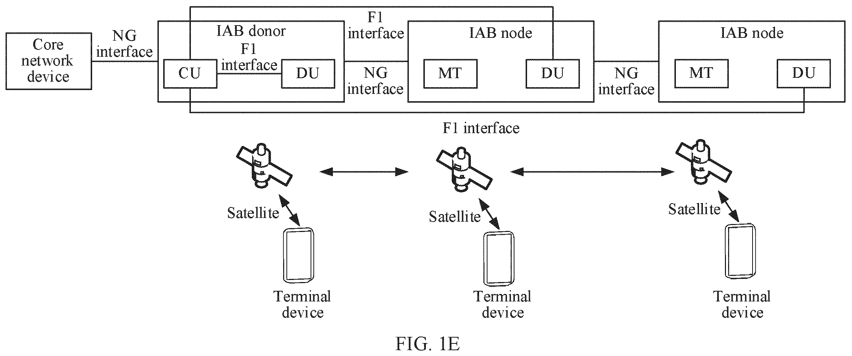

Refer to FIG. 1A to FIG. 1E. FIG. 1A and FIG. 1E are diagrams of an architecture of a communication system according to an embodiment of this application. The architecture may be understood as an NTN-based RAN architecture (NTN-based NG-RAN architecture). A 5G communication system is used as an example for description. An access network device may be a next-generation radio access network (next generation-RAN, NG-RAN), and a core network device may be a 5G core network (5G core network, 5G CN). In addition, an example in which a satellite is used as a non-terrestrial network device and a base station is used as the access network device is used.

A radio link between a terminal device and the access network device may be referred to as an air interface, for example, an NR Uu interface. An NG interface is an interface between the access network device and the core network device, and is mainly configured to exchange non-access stratum (non-access stratum, NAS) signaling and other signaling of a core network and service data of a user. An Xn interface is an interface between access network devices, and is mainly configured to exchange handover signaling and other signaling. In a 4G communication system, the Xn interface may be set as an X2 interface, and the NG interface may be set as an S1 interface. An N6 interface may be an interface between the core network device and a data network device.

As shown in FIG. 1A to FIG. 1E, the communication system may include at least one terminal device and at least one network device. The terminal device may be connected to the network device in a wireless manner. The network device may include the access network device, the core network device, the data network device, and the like. For the terminal device, the core network device, and the data network device, refer to the foregoing descriptions. Details are not described herein again. The access network device may include a ground station (for example, an NTN gateway (NTN gateway)), and is configured to forward signaling and service data between the non-terrestrial network device and the core network device. The non-terrestrial network device (for example, the satellite) and the access network device (for example, the base station) may be separately deployed, as shown in FIG. 1A. Alternatively, as shown in FIG. 1B and FIG. 1C, the non-terrestrial network device may be deployed by using the access network device, that is, the non-terrestrial network device is used as the access network device or a part of the access network device.

Specifically, the architecture shown in FIG. 1A may be referred to as a transparent satellite architecture (for example, RAN architecture with transparent satellite). As shown in FIG. 1A, the access network device may include the base station and an RRU, and the RRU includes the satellite and the ground station. The satellite is connected to the ground station and the terminal device by using a radio link, and the ground station is connected to the data network device by using the base station and the core network device. In a scenario corresponding to this architecture, the satellite has functions of radio frequency filtering (radio frequency filtering) and frequency conversion and amplification (frequency conversion and amplification). In other words, the satellite may implement transparent transmission and forwarding, and regenerate, as a delay (relay) of layer 1 (layer 1), a physical layer signal, and does not have another higher protocol layer.

The satellite shown in FIG. 1B may be referred to as a regenerative satellite (regenerative satellite) without an inter-satellite link (inter-satellite link, ISL), and the satellite shown in FIG. 1C may be referred to as a regenerative satellite with an inter-satellite link. In the architectures shown in FIG. 1B and FIG. 1C, the satellite is used as the access network device, and has a processing function of the access network device (for example, a gNB processed payload). A service link between the terminal device and the satellite is connected through an NR Uu interface, and a feeder link between the ground station and the satellite is connected through a satellite radio interface (satellite radio interface, SRI). FIG. 1C includes two satellites, and an ISL between the satellites is connected through an Xn interface.

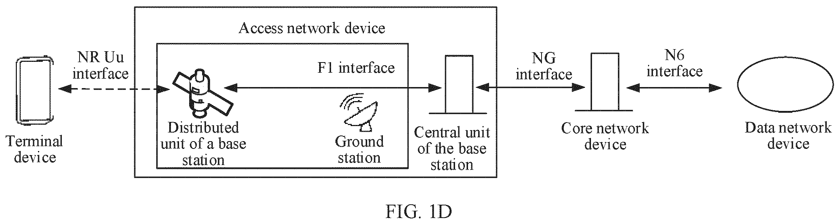

The satellite shown in FIG. 1D may be referred to as a regenerative satellite with a DU processing function of the access network device (for example, NG-RAN with a regenerative satellite based on gNB-DU). In this scenario, the satellite is used as a DU of the base station (for example, a gNB-DU), and the access network device may further include a CU of the base station (for example, a gNB-CU), and the ground station that may be configured to transmit information between the DU of the base station and the CU of the base station. The architecture shown in FIG. 1E may be referred to as an access network device architecture with an IAB function (for example, gNB processed payload on relay-like architecture). In this scenario, the satellite is used as an IAB node (IAB node). For the access network device architecture with the IAB function, refer to FIG. 1B or FIG. 1C. The satellite in the figure is replaced with an IAB donor, so that the terminal device accesses the IAB node in the network through an air interface. The IAB node may be connected to the core network device by using a radio link.

The IAB node is used as a relay node. The relay node may also be referred to as a wireless backhaul node, a wireless backhaul device, or the like. This is not limited herein. The relay node may provide a wireless backhaul service, which is a data and/or signaling backhaul service provided by using a wireless backhaul link. The following uses the IAB node as an example for description. A link between the IAB node and the terminal device (that is, a child node) may be referred to as an access link (access link, AL), and a link between the IAB node and the IAB donor (that is, a parent node) and a link between IAB nodes may each be referred to as a backhaul link (backhaul link, BL).

For example, as shown in FIG. 1E, the IAB donor may include a CU (which may be referred to as an IAB donor CU) and a DU (which may be referred to as an IAB donor DU). The IAB donor CU and the IAB donor DU are network elements divided based on a protocol stack and a function. For example, an RRC layer, a SDAP layer, and a PDCP layer are allocated to the IAB donor CU, and an RLC layer, a MAC layer, and a PHY layer are allocated to the IAB donor DU.

Still refer to FIG. 1E. The CU and the DU are connected through an F1 interface, and the CU and the core network device are connected through an NG interface. The IAB node includes a mobile terminal (mobile terminal, MT) side of the IAB node and a DU side of the IAB node. The IAB node on the MT side may serve as a role of the terminal device, and may also be referred to as an MT functional unit of the IAB node (which may be referred to as an IAB-MT or an IAB-UE). The DU side of the IAB node may serve as a role of the access network device, and may also be referred to as a DU functional unit of the IAB node (which may be referred to as an IAB-DU). The IAB-MT and the IAB-DU may be logical division, and functions of the IAB-MT and the IAB-DU are implemented by the IAB node. Alternatively, the IAB-MT and the IAB-DU may be physical division, and the IAB-MT and the IAB-DU may be different physical devices in the IAB node. A function of the IAB-DU is similar to that of a DU of a gNB, and the IAB-MT has a function of UE and is configured to provide data backhaul.

It should be noted that FIG. 1E is described by using an IAB network as an example. Content in FIG. 1E is also applicable to a relay network other than the IAB network. In this case, the IAB node may be replaced with a relay node, and the IAB donor may be replaced with a donor node. In the network architecture shown in FIG. 1A to FIG. 1E, although the network device and the terminal device are shown, the application scenario may not be limited to including the network device and the terminal device, for example, may further include a device configured to carry a virtualized network function. This is apparent to a person skilled in the art, and details are not described herein again.

In addition, a quantity and a type of network devices and terminal devices in the network architecture shown in FIG. 1A to FIG. 1E are merely examples, and embodiments of this application are not limited thereto. For example, more or fewer terminal devices that communicate with the network device may be included. For another example, more or fewer terminal devices that communicate with the network device may be included. For conciseness of description, this is not described in the accompanying drawings again.

For ease of understanding embodiments of this application, the following first provides definitions of technical terms that may appear in embodiments of this application. Terms used in implementations of this application are only used to explain specific embodiments of this application, but are not intended to limit this application.

### 1: Cell identifier

In terrestrial communication, one network device may have a plurality of cells. Generally, cell identifiers of these cells may include a physical cell identifier (physical cell identifier, PCI), a global cell identifier (cell global identifier, CGI), and a broadcast area identifier, for example, a tracking area code (tracking area code, TAC) or a tracking area identity (tracking area identity, TAI). Generally, the CGI includes a mobile country code, a mobile network code, a base station identity code (which may also be referred to as a base station identifier), and a cell identity code (which may also be referred to as a cell identifier).

In a radio system, a network side may broadcast the CGI of each cell in a broadcast message of the cell. In this way, when the network side discovers a cell, the network side can learn, by enabling a terminal device to report a CGI of the cell, which network device the cell belongs to. For example, when an operator deploys a new base station in a place, a neighboring base station reports a CGI of a corresponding cell under the base station via UE, so that the network side may know which base station the cell belongs to.

### 2: Control plane interface

To implement communication between network devices, for example, information transmission between neighboring base stations in a cell selection or reselection process, a control plane interface needs to be set up between two network devices. A type of the control plane interface is not limited in this application, and may be an Xn interface in a 5G communication system, an X2 interface in a 4G communication system, or the like.

A control plane related message between the two network devices may be transmitted by using a transport network layer corresponding to a stream control transmission protocol (stream control transmission protocol, SCTP). Before the control plane interface is set up, an SCTP TNL address needs to be known.

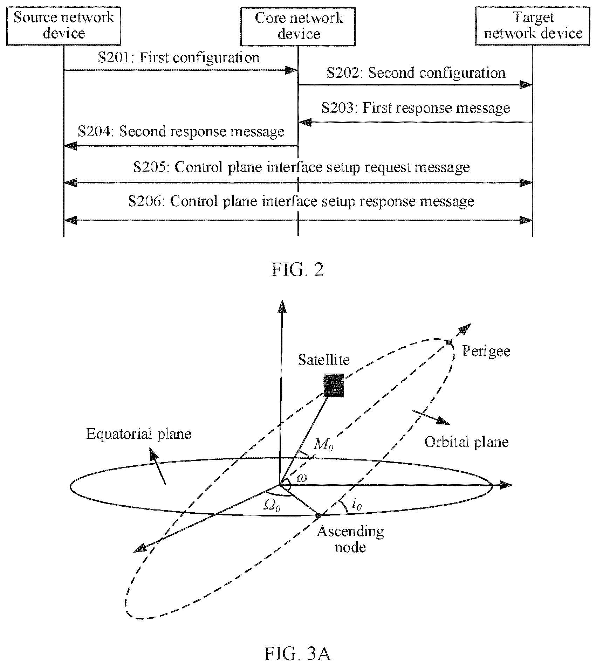

For a procedure of obtaining (or discovering) a TNL address, refer to FIG. 2. A general application scenario of the procedure is that a source network device discovers a new cell in a neighboring cell of the source network device by using PCI information reported by a terminal device, and the source network device obtains, by using a CGI of the cell reported by the terminal device, a base station identifier corresponding to a target network device, to set up a control plane interface between the two network devices through the procedure shown in FIG. 2. Specifically, as shown in FIG. 2, the procedure may include but is not limited to six steps such as S201 to S206.

S201: The source network device sends a first configuration to a core network device (for example, an AMF). Correspondingly, the core network device receives the first configuration from the source network device.

The first configuration may be an uplink radio access network configuration transfer message (for example, *uplink RAN configuration transfer*)*,* and is used to request a TNL address of a second network device. The first configuration may include some related information, for example, information such as base station identifiers of the source network device and the target network device and a TNL address of the source network device.

S202: The core network device sends a second configuration to the target network device. Correspondingly, the target network device receives the second configuration from the core network device.

The second configuration may be a downlink radio access network configuration transfer message (for example, *downlink RAN configuration transfer*)*,* and is used to send, to the target network device, a request from the source network device. The core network device can learn, by using the base station identifier of the target network device by the source network device, a network device to which the request from the source network device is to be sent, and then may send the second configuration to the target network device. The second configuration may include some related information, for example, information such as the base station identifiers of the source network device and the target network device and the TNL address of the source network device.

S203: The target network device sends a first response message to the core network device. Correspondingly, the core network device receives the first response message from the target network device.

The first response message may be another uplink radio access network configuration transfer message, and may be understood as a response message of the target network device for the second configuration in step S202. The response message carries one or more TNL addresses for an SCTP connection to the source network device, and includes some other related information, for example, CGIs of the source network device and the target network device.

S204: The core network device sends a second response message to the source network device. Correspondingly, the source network device receives the second response message from the core network device.

The second response message may be another downlink radio access network configuration transfer message, and may be understood as the response message in step S203 forwarded by the core network device. The second response message includes some related information carried in the first response message, for example, the one or more TNL addresses for the SCTP connection between the target network device and the source network device, and the base station identifiers of the source network device and the target network device.

S205: The source network device sends a control plane interface setup request message (for example, *Xn setup request*) to the target network device. Correspondingly, the target network device receives the control plane interface setup request message from the source network device.

Then, step S206 may be performed: The target network device sends a control plane interface setup response message (for example, *Xn setup response*) to the source network device. Correspondingly, the source network device receives the control plane interface setup response message from the target network device.

### 3: Ephemeris information

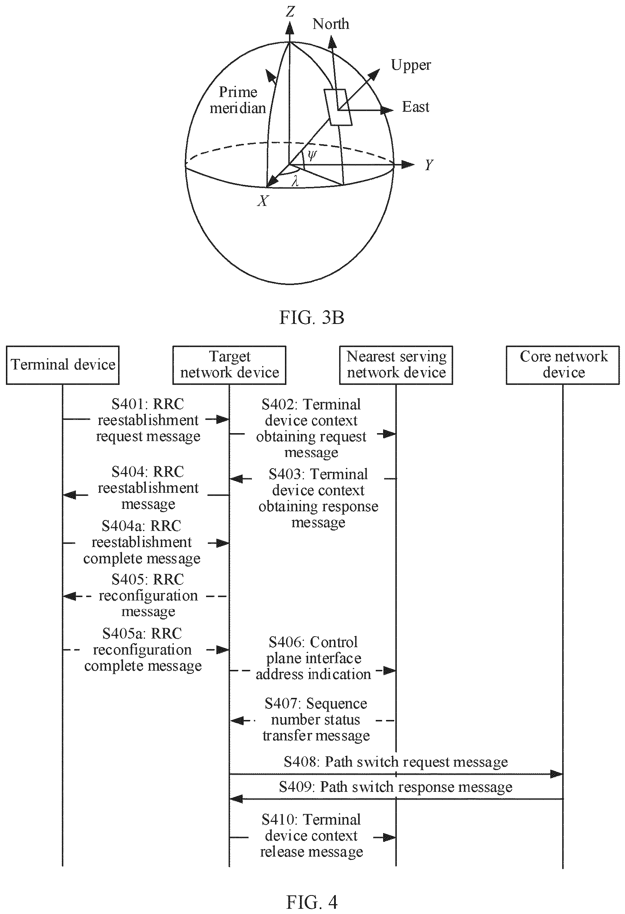

Ephemeris information of a cell is running path information of a non-terrestrial network device associated with the cell, and may also be referred to as ephemeris information of the non-terrestrial network device associated with the cell. For a manner of determining or describing the ephemeris information, refer to FIG. 3A and FIG. 3B. FIG. 3A is a diagram of orbit information represented in a Keplerian orbit format according to an embodiment of this application. FIG. 3B is a diagram of orbit information represented by a state vector according to an embodiment of this application. Parameters shown in FIG. 3A include an orbit-level parameter. For example, *i*₀ is used as an inclination, *Ω*₀ is used as a longitude of an ascending node (ascending node) of an orbital plane, and *ω* is used as an argument of a perigee (perigee). The foregoing orbit-level parameter is used to determine a running orbit. The parameters shown in FIG. 3A further include a satellite-level parameter, used to determine a location of a satellite. For example, *M*₀ is used as a mean anomaly, and is used for reference time.

For a non-synchronous satellite, a speed vector in the state vector, such as (*vₓ*, *v_{y}*, *v_{z}*), requires provision of information about a rate and a reference point. A location coordinate system on which the state vector is based may be a longitude-latitude-altitude coordinate system (*λ*, *ψ, h*) shown in FIG. 3B, or may be an earth-centered earth-fixed coordinate system (*x, y, z*), or the like. This is not limited herein. In this description manner, the foregoing parameters are parameters corresponding to the reference time.

### 4: Ascending orbit non-terrestrial network device and descending orbit non-terrestrial network device

Based on a movement of a non-terrestrial network device (for example, a satellite), the non-terrestrial network device may be classified as an ascending orbit non-terrestrial network device and a descending orbit non-terrestrial network device. The ascending orbit non-terrestrial network device means that the network device currently runs from south to north, and the descending orbit non-terrestrial network device means that the network device currently runs from north to south.

A terminal device may separately determine, based on ephemeris information of two cells, whether network devices to which the two cells belong are currently ascending orbit non-terrestrial network devices or descending orbit non-terrestrial network devices. When one of the network devices to which the two cells belong is an ascending orbit non-terrestrial network device, and the other is a descending orbit non-terrestrial network device, a relative speed between the two network devices is high, and it is difficult for the network devices to communicate with each other. Therefore, when the network devices to which the two cells belong are both ascending orbit non-terrestrial network devices, or the network devices to which the two cells belong are currently descending orbit non-terrestrial network devices, it may be determined that the network devices to which the two cells belong can set up a control plane interface; or when one of the network devices to which the two cells belong is an ascending orbit non-terrestrial network device, and the other is a descending orbit non-terrestrial network device, it may be determined that the network devices to which the two cells belong cannot set up a control plane interface. It should be noted that in the present invention, that the network devices to which the two cells belong cannot set up the control plane interface may also be referred to as that the two cells cannot set up the control plane interface.

### 5: Network type and type group of a cell

The network type of the cell means whether the cell is a cell in a terrestrial network system or a cell in a non-terrestrial network system. Further, a cell in the non-terrestrial network system may be further distinguished as a cell in a low-earth orbit (low-earth orbit, LEO) non-terrestrial network system, a cell in a medium-earth orbit (medium-earth orbit, MEO) non-terrestrial network system, or a cell in a geostationary earth orbit (geostationary earth orbit, GEO) non-terrestrial network system. The type group is a network type group specified in a protocol, or means that a network side notifies a specific network type included in a network type group. For example, a low-earth orbit non-terrestrial network device is used as a type group, and a medium-earth orbit non-terrestrial network device is used as another type group.

A non-terrestrial network device in an NTN moves at a high speed, but a terrestrial network device in a terrestrial network is stationary or moves at a low speed. The non-terrestrial network device in the NTN may fail to communicate with the terrestrial network device in the terrestrial network. Consequently, a control plane interface is incapable of being set up between the two network devices. Therefore, whether a control plane interface is capable of being set up between two cells or whether a control plane interface is capable of being set up between network devices to which the two cells belong may be determined based on network types of the two cells. For example, when a network type of a serving cell and a network type of a neighboring cell of the serving cell are the same or belong to a same type group, it is determined that a control plane interface is capable of being set up between a first network device and a second network device; or when a network type of a serving cell and a network type of a neighboring cell of the serving cell are not the same or do not belong to a same type group, it is determined that a control plane interface is incapable of being set up between a first network device and a second network device.

### 6: RRC reestablishment procedure

After a terminal device sets up an RRC connection to a network and enters an RRC connected state, occurrence of a case such as a radio link failure (radio link failure, RLF), a handover failure (handover failure, HOF), an integrity check failure (integrity check failure), or an RRC reconfiguration failure triggers an RRC reestablishment process. The foregoing case may be referred to as a case in which RRC reestablishment is triggered. This is not limited in this application. The RRC reestablishment process includes resumption of an SRB1 operation and security reactivation, to restore service continuity. If there is a control plane interface between a target network device for reestablishment and a source network device, the target network device may obtain a context of the terminal device, to perform an RRC reestablishment procedure. As shown in FIG. 4, an RRC reestablishment procedure is provided.

As shown in FIG. 4, the RRC reestablishment procedure may include but is not limited to steps such as S401 to S410. The method is performed when the terminal device triggers RRC reestablishment after the terminal device sets up an RRC connection to a network device and enters the RRC connected state (for example, *UE in RRC_CONNECTED CM_CONNECTED*). When the terminal device triggers the RRC reestablishment procedure, the terminal device performs cell selection, and a cell selected in cell selection is used as a target cell. Then, step S401 may be performed: The terminal device sends an RRC reestablishment request message (for example, *RRCReestablishmentRequest*) to the target network device (a network device to which the target cell belongs). Correspondingly, the target network device receives the RRC reestablishment request message from the terminal device. Generally, the RRC reestablishment request message carries a cell identifier (for example, a PCI) of a serving cell of the terminal device before RRC reestablishment.

If the target network device for reestablishment finds that there is no context of the terminal device locally, the target network device performs step S402: sending a terminal device context obtaining request message (for example, *RETRIEVE UE CONTEXT REQUEST*) to a nearest serving network device (for example, a last serving gNB, which may be referred to as the source network device) of the terminal device, to request the nearest serving network device to send the context of the terminal device to the target network device. Correspondingly, the nearest serving network device receives the terminal device context obtaining request message from the target network device, where the terminal device context obtaining request message is used to request the nearest serving network device to send the context of the terminal device to the target network device.

S403: The nearest serving network device sends a terminal device context obtaining response message (for example, *RETRIEVE UE CONTEXT RESPONSE*) to the target network device. Correspondingly, the target network device receives the terminal device context obtaining response message from the nearest serving network device, so that the target network device obtains the context of the terminal device from the nearest serving network device.

S404: The target network device sends an RRC reestablishment message (for example, *RRCReestablishment*) to the terminal device. Correspondingly, the terminal device receives the RRC reestablishment message from the target network device, where the RRC reestablishment message indicates the terminal device to perform RRC reestablishment with the target network device.

After the terminal device completes RRC reestablishment with the target network device, the RRC reestablishment procedure may further include step S404a: The terminal device sends an RRC reestablishment complete message (for example, *RRCReestablishmentComplete*) to the target network device. Correspondingly, the target network device receives the RRC reestablishment complete message from the terminal device.

In an example, the RRC reestablishment procedure further includes step S405: The target network device sends an RRC reconfiguration message (for example, *RRCReconfiguration*) to the terminal device. Correspondingly, the terminal device receives the RRC reconfiguration message from the target network device.

Optionally, after the terminal device completes RRC reconfiguration, the RRC reestablishment procedure may further include step S405a: The terminal device sends an RRC reconfiguration complete message (for example, *RRCReconfigurationComplete*) to the target network device. Correspondingly, the target network device receives the RRC reconfiguration complete message from the terminal device.

In an example, the RRC reestablishment procedure further includes step S406: The target network device sends a control plane interface address indication (for example, *XN-U ADDRESS INDICATION*) to the nearest serving network device. Correspondingly, the nearest serving network receives the control plane interface address indication from the target network device.

In an example, the RRC reestablishment procedure further includes step S407: The nearest serving network device sends a sequence number status transfer message (for example, SN *STATUS TRANSFER*) to the target network device. Correspondingly, the target network device receives the sequence number status transfer message from the nearest serving network device, where sequence number status transfer message indicates a sequence number of a received data packet.

After air interface reestablishment is completed, the target network device may perform step S408: sending a path switch request message (for example, *PATH SWITCH REQUEST*) to a core network device (for example, an AMF in the core network device). Correspondingly, the core network device receives the path switch request message from the target network device, where the path switch request message is used to request the core network device to send data to the target network device instead of a previous network device.

After modifying a path, the core network device may perform step S409: The core network device sends a path switch response message (for example, *PATH SWITCH REQUEST RESPONSE*) to the target network device. Correspondingly, the target network device receives the path switch response message from the core network device.

S410: The target network device sends a terminal device context release message (for example, *UE CONTEXT RELEASE*) to the nearest serving network device. Correspondingly, the nearest serving network device receives the terminal device context release message from the target network device, to release the context of the terminal device.

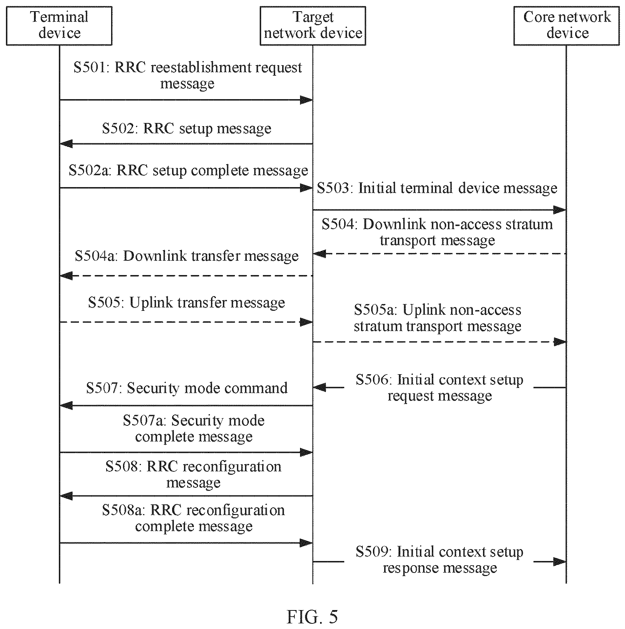

However, if there is no control plane interface between a target network device for reestablishment and the source network device, the target network device cannot obtain a context of the terminal device, and the target network device may indicate the terminal device to perform a normal RRC setup procedure. Refer to FIG. 5. As shown in FIG. 5, an RRC reestablishment procedure may include but is not limited to steps such as S501 to S509.

S501: The terminal device sends an RRC reestablishment request message to the target network device. Correspondingly, the target network device receives the RRC reestablishment request message.

S502: The target network device sends an RRC setup message (for example, *RRCSetup*) to the terminal device. Correspondingly, the terminal device receives the RRC setup message from the target network device. Step S502 may be understood as a step that is performed when step S403 is not received after step S402, or a step performed when the target network device knows that the target network device cannot obtain the context of the terminal device from a nearest serving network device of the terminal device. Generally, the terminal device is still in a connected state at this time.

In an example, after the terminal device completes an RRC connection to the target network device, the RRC reestablishment procedure may further include step S502a: The terminal device sends an RRC setup complete message (for example, *RRCSetupComplete*) to the target network device. Correspondingly, the target network device receives the RRC setup complete message from the terminal device, where the RRC setup complete message is used to notify the target network device that the RRC connection to the terminal device is completed.

S503: The target network device sends an initial terminal device message (for example, *INITIAL UE MESSAGE*) to a core network device (for example, an AMF network element in the core network device). Correspondingly, the core network device receives the initial terminal device message from the target network device, so that a message is forwarded between the core network device and information about the terminal device via the target network device.

In an example, the RRC reestablishment procedure further includes step S504: The core network device sends a downlink non-access stratum transport message (for example, *DOWNLINK NAS TRANSPORT*) to the target network device. Correspondingly, the target network device receives the downlink non-access stratum transport message from the core network device.

Optionally, after step S504, the RRC reestablishment procedure may further include step S504a: The target network device sends a downlink transfer message (for example, *DLInformationTransfer*) to the terminal device. Correspondingly, the terminal device receives the downlink transfer message from the target network device.

In an example, the RRC reestablishment procedure further includes step S505: The terminal device sends an uplink transfer message (for example, *ULInformationTransfer*) to the target network device. Correspondingly, the target network device receives the uplink transfer message from the terminal device.

Optionally, after S505, the RRC reestablishment procedure may further include step S05a: The target network device sends an uplink non-access stratum transport message (for example, *UPLINK NAS TRANSPORT*) to the core network device. Correspondingly, the core network device receives the uplink non-access stratum transport message from the target network device.

S506: The core network device sends an initial context setup request message (for example, *INITIAL CONTEXT SETUP REQUEST*) to the target network device. Correspondingly, the target network device receives the initial context setup request message from the core network device.

S507: The target network device sends a security mode command (for example, *SecurityModeCommand*) to the terminal device. Correspondingly, the terminal device receives the security mode command from the target network device.

In an example, after step S507, the RRC reestablishment procedure may further include step S507a: The terminal device sends a security mode complete message (for example, *SecurityModeComplete*) to the target network device. Correspondingly, the target network device receives the security mode complete message from the terminal device.

S508: The target network device sends an RRC reconfiguration message (for example, *RRCReconfiguration*) to the terminal device. Correspondingly, the terminal device receives the RRC reconfiguration message from the target network device.

In an example, after step S508, the RRC reestablishment procedure may further include S508a: The terminal device sends an RRC reconfiguration complete message (for example, *RRCReconfigurationComplete*) to the target network device. Correspondingly, the target network device receives the RRC reconfiguration complete message from the terminal device.

S509: The target network device sends an initial context setup response message (for example, *INITIAL CONTEXT SETUP RESPONSE*) to the core network device. Correspondingly, the core network device receives the initial context setup response message from the target network device, to complete a reestablishment process of the terminal device and the target network device.

It can be learned from FIG. 5 that if RRC reestablishment fails, the terminal device needs to first set up the RRC connection and then complete the other steps. Compared with the procedure in which the terminal device successfully completes RRC reestablishment through step S404 and step S404a in FIG. 4, the procedure requires more steps (for example, step S502 to step S509) for data transmission.

### 7: RRC resume (resume) procedure

For a terminal device in an inactive (RRC_inactive) state, when the terminal device needs to send a service or the terminal device needs to trigger an update message (for example, RAN-notification area update, RNA update) of a communication area of a RAN, the terminal device sends an RRC resume request to a cell on which the terminal device currently camps, to perform an RRC resume procedure.

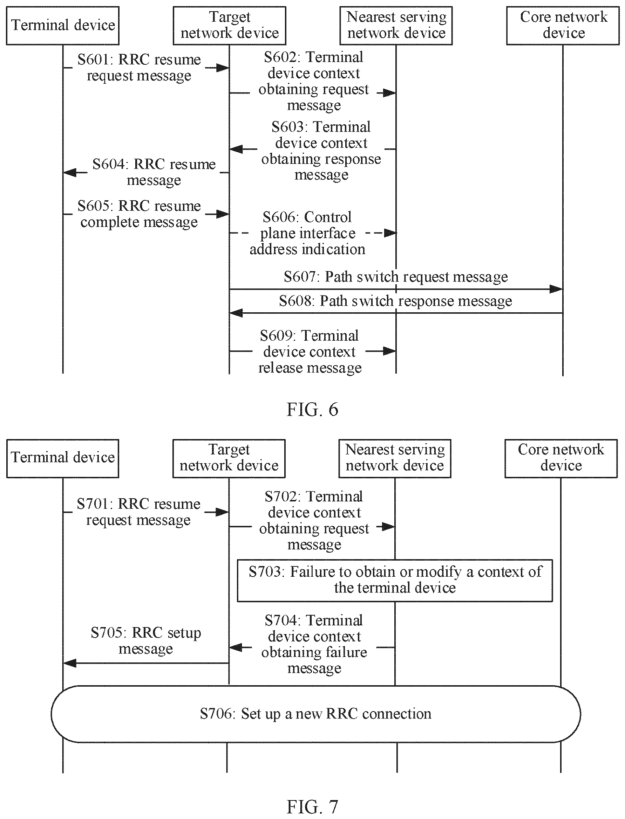

If there is a control plane interface between a target network device for reestablishment and a source network device, refer to FIG. 6. FIG. 6 is a diagram of interaction in an RRC resume procedure according to an embodiment of this application. As shown in FIG. 6, the RRC resume procedure may include but is not limited to steps such as S601 to S609. When the terminal device is in the inactive state (for example, *UE in RRC INACTIVE CM_CONNECTED*)*,* step S601 may be performed: The terminal device sends an RRC resume request message (for example, *RRCResumeRequest*) to the target network device. Correspondingly, the target network device receives the RRC resume request message from the terminal device.

If the target network device receiving an RRC resume request finds that there is no context of the terminal device locally, the target network device performs step S602: sending a terminal device context obtaining request message (for example, *RETRIEVE UE CONTEXT REQUEST*) to a nearest serving network device (for example, a last serving gNB, which may be referred to as the source network device) of the terminal device. Correspondingly, the nearest serving network device receives the terminal device context obtaining request message from the target network device, where the terminal device context obtaining request message is used to request to obtain a context of the terminal device from the nearest serving network device.

S603: The nearest serving network device sends a terminal device context obtaining response message (for example, *RETRIEVE UE CONTEXT RESPONSE*) to the target network device. Correspondingly, the target network device receives the terminal device context obtaining response message from the nearest serving network device, so that the target network device obtains the context of the terminal device from the nearest serving network device.

S604: The target network device sends an RRC resume message (for example, *RRCResume*) to the terminal device. Correspondingly, the terminal device receives the RRC resume message from the target network device, where the RRC resume message indicates the target network device to perform RRC resume with the terminal device.

After the target network device performs RRC resume with the terminal device, the terminal device is in a connected state (for example, *UE in RRC_CONNECTED CM_CONNECTED*)*.* The terminal device may perform step S605: sending an RRC resume complete message (for example, *RRCResumeComplete*) to the target network device. Correspondingly, the target network device receives the RRC resume complete message from the terminal device.

In an example, the RRC resume procedure may further include step S606: The target network device sends a control plane interface address indication (for example, *XN-UADDRESS INDICATION*) to the nearest serving network device. Correspondingly, the nearest serving network receives the control plane interface address indication from the target network device.

S607: The target network device sends a path switch request message (for example, *PATH SWITCH REQUEST*) to a core network device (for example, an AMF). Correspondingly, the core network device receives the path switch request message from the target network device, where the path switch request message is used to request the core network device to send data to the target network device instead of a previous network device.

After modifying a path, the core network device may perform step S608: The core network device sends a path switch response message (for example, *PATH SWITCH REQUEST RESPONSE*) to the target network device. Correspondingly, the target network device receives the path switch response message from the core network device.

S609: The target network device sends a terminal device context release message (for example, *UE CONTEXT RELEASE*) to the nearest serving network device. Correspondingly, the nearest serving network device receives the terminal device context release message from the target network device, to release the context of the terminal device.

However, if there is no control plane interface between a target network device receiving an RRC resume request and a source network device, or a target network device cannot obtain a context of the terminal device from a source network device even if there is a control plane interface, the target network device cannot obtain the context of the terminal device. For an RRC resume procedure of the target network device, refer to FIG. 7. FIG. 7 is a diagram of interaction in another RRC resume procedure according to this application. As shown in FIG. 7, the RRC resume procedure may include steps such as S701 to S706. For step S701, refer to the descriptions of step S601. For step S702, refer to the descriptions of step S602.

S701: The terminal device sends an RRC resume request message to the target network device.

S702: The target network device sends a terminal device context obtaining request message to a nearest serving network device.

In a case of a failure to obtain or modify the context of the terminal device in step S703 (for example, Failure to retrieve or verify UE context), the nearest serving network device performs step S704: sending a terminal device context obtaining failure message (for example, *RETRIEVE UE CONTEXT FAILURE*) to the target network device. Correspondingly, the target network device receives the terminal device context obtaining failure message from the nearest serving network device. Alternatively, when there is no control plane interface between the target network device and the source network device, the target network device may directly consider that the context of the terminal device fails to be obtained from the source network device or a source serving cell in the source network device, or directly consider that the context of the terminal device cannot be obtained.

Then, the target network device performs step S705: sending an RRC setup message (for example, *RRCSetup*) to the terminal device. Correspondingly, the terminal device receives the RRC setup message from the target network device. In step S706, the terminal device, the target network device, and a core network device set up a new RRC connection. Refer to the descriptions of FIG. 5. Details are not described herein again. In other words, when there is no control plane interface between the target network device and the source network device, the target network device fails to obtain the context of the terminal device from the source network device or the source serving cell in the source network device, and a new RRC connection needs to be set up between the terminal device and the target network device before the context of the terminal device is obtained. Compared with the RRC resume procedure shown in FIG. 6, this procedure requires more steps (for example, step S502 to step S509).

Because a non-terrestrial network device moves at a high speed, a physical coverage area of the non-terrestrial network device changes. Therefore, in a non-terrestrial network, a procedure such as RRC reestablishment or RRC resume is also triggered, causing the terminal device to perform cell selection or reselection. In addition, considering that a delay of communication between the non-terrestrial network device in the non-terrestrial network and another network device is long, as shown in FIG. 5 or FIG. 7, a large quantity of steps are performed, so that a delay of an entire cell selection or reselection procedure is excessively long.

To improve cell selection or reselection efficiency of a terminal device, embodiments of this application provide a communication method and a related apparatus. The communication method may be applied to various communication scenarios, for example, one or more of enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communication, mMTC), enhanced machine type communication (enhanced machine type communication, eMTC), an IoT, an NB-IoT, customer premises equipment (customer premises equipment, CPE), augmented reality (augmented reality, AR), virtual reality (virtual reality, VR), D2D, V2X, and the like.

The terminal device in this embodiment may be the terminal device in the foregoing communication system. A function performed by the terminal device in this embodiment may be performed by an apparatus (for example, a chip, a chip system, or a circuit) in the terminal device or an apparatus that can be used together with the terminal device. A network device in this embodiment may be the network device in the foregoing communication system. A function performed by the network device in this embodiment may be performed by an apparatus (for example, a chip, a chip system, or a circuit) in the network device or an apparatus that can be used together with the network device.

The following uses a network device to which a serving cell belongs, a network device to which a cell adjacent to the serving cell (referred to as a neighboring cell of the serving cell or a neighboring cell below) belongs, and a network device to which a target cell belongs as an example for description. For ease of description, the network device to which the serving cell belongs may be referred to as a first network device, the network device to which the neighboring cell belongs may be referred to as a second network device, and the network device to which the target cell belongs may be referred to as a third network device.

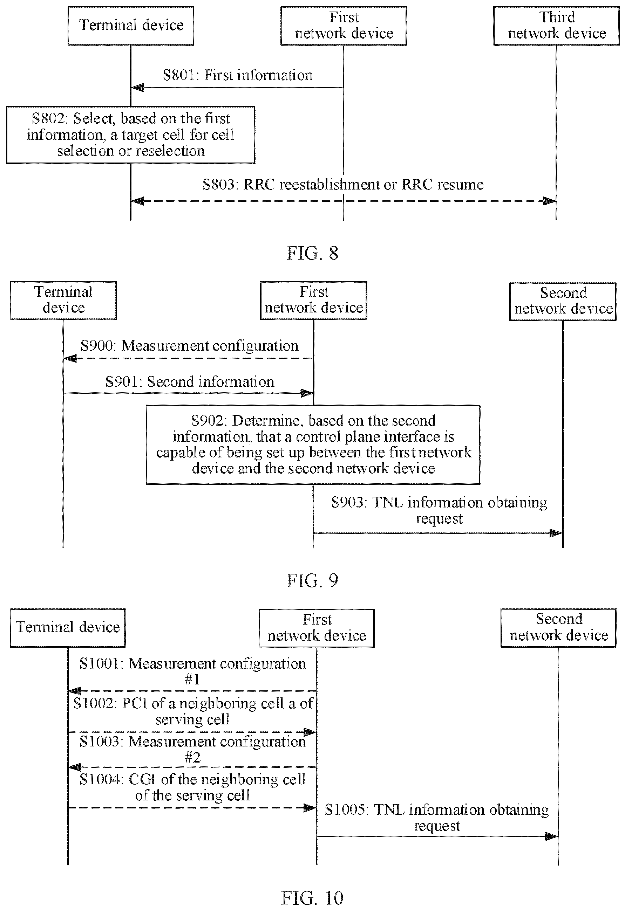

FIG. 8 is a diagram of interaction in a communication method according to an embodiment of this application. In FIG. 8, the communication method includes but is not limited to the following step S801 to step S803.

S801: The first network device sends first information to the terminal device. Correspondingly, the terminal device receives the first information from the first network device.

In an example, before step S801, the method further includes: The first network device determines the first information.

In an implementation of this application, the first information may include a first indication indicating a candidate cell for cell selection or reselection. The candidate cell is not limited in this application, and may be a cell recommended by the network device, a preferred cell for cell selection or reselection, a cell corresponding to a current location of the terminal device, or the like. Optionally, the candidate cell is determined from the neighboring cell of the serving cell.

In an example, there is a control plane interface between the candidate cell and the serving cell (or referred to as a source serving cell). That there is a control plane interface between the candidate cell and the serving cell may be understood as that there is a control plane interface between a network device to which the candidate cell belongs and the network device to which the serving cell belongs. Because there is the control plane interface, the candidate cell may obtain a context of the terminal device in the serving cell, or in other words, the network device to which the candidate cell belongs may obtain the context of the terminal device in the serving cell.

For example, the serving cell is a cell managed by the first network device. The terminal device may communicate with the first network device via the serving cell. In this way, the candidate cell for which there is the control plane interface with the serving cell may be preferentially selected during cell selection or reselection, so that the network device to which the candidate cell belongs may obtain the context of the terminal device from the first network device based on the control plane interface, to implement RRC reestablishment or RRC resume according to the diagram of interaction shown in FIG. 4 or FIG. 6. The candidate cell is selected, so that it is ensured that the terminal device selects a proper cell during cell selection or reselection, a success rate of RRC reestablishment or RRC resume is improved, and a service interruption delay is shortened.

For example, the first indication includes one or more of a first cell list, a second cell list, frequency information of the candidate cell, indication information (referred to as indication information #A below) indicating whether there is a control plane interface between a neighboring cell of the serving cell and the serving cell, and the like. The first cell list includes the candidate cell. The second cell list includes a neighboring cell of the serving cell other than the candidate cell.

It may be understood that the candidate cell may be determined based on information in the first indication. For example, the candidate cell may be determined based on cell information (for example, a cell identifier and cell frequency information) in the first cell list. For example, a neighboring cell satisfying the cell information in the first cell list is used as the candidate cell. For another example, a non-candidate cell may be excluded from the neighboring cell based on the second cell list, to obtain the candidate cell; or a cell that successfully matches the frequency information of the candidate cell may be searched as the candidate cell. For another example, a neighboring cell for which there is a control plane interface with the serving cell may be determined as the candidate cell based on the indication information #A, and/or a neighboring cell for which there is no control plane interface with the serving cell is used as a non-candidate cell based on the indication information #A, so that the neighboring cell other than the candidate cell is excluded to obtain the candidate cell.

In an implementation of this application, the first information may alternatively include ephemeris information of the serving cell and ephemeris information of the neighboring cell. The ephemeris information may be understood as ephemeris information of the network device to which the cell belongs. Refer to the foregoing content.

For example, it is determined, based on the ephemeris information of the serving cell, that the first network device is an ascending orbit non-terrestrial network device or a descending orbit non-terrestrial network device, and it is determined, based on the ephemeris information of the neighboring cell of the serving cell, that the second network device is an ascending orbit non-terrestrial network device or a descending orbit non-terrestrial network device. If both the first network device and the second network device are ascending orbit non-terrestrial network devices, or both the first network device and the second network device are descending orbit non-terrestrial network devices, it is determined that the neighboring cell covered by the second network device is the candidate cell; or if one of the first network device and the second network device is an ascending orbit non-terrestrial network device, and the other is a descending orbit non-terrestrial network device, it is determined that the neighboring cell covered by the second network device is a non-candidate cell.

It can be learned from the foregoing that whether a network device to which a cell belongs is an ascending orbit non-terrestrial network device or a descending orbit non-terrestrial network device may be determined based on ephemeris information of the cell. Therefore, when both the first network device and the second network device are ascending orbit non-terrestrial network devices, or both the first network device and the second network device are descending orbit non-terrestrial network devices, it may be determined that a control plane interface is capable of being set up between the first network device and the second network device; or when one of the first network device and the second network device is an ascending orbit non-terrestrial network device, and the other is a descending orbit non-terrestrial network device, it may be determined that a control plane interface is incapable of being set up between the first network device and the second network device. Therefore, the neighboring cell of the second network device for which the control plane interface is capable of being set up may be selected as the candidate cell, and the candidate cell may be preferentially selected during cell selection or reselection. When there is a control plane interface between the network device to which the candidate cell belongs and the first network device, RRC reestablishment or RRC resume may be implemented according to the diagram of interaction shown in FIG. 4 or FIG. 6. The candidate cell is selected, so that efficiency of the terminal device in selecting or reselecting a cell associated with a non-terrestrial network device to perform RRC reestablishment or RRC resume is improved, and the service interruption delay is shortened.

In another implementation, the first information may include a network type or a type group of the serving cell and a network type or a type group of the neighboring cell of the serving cell. For the network type and the type group of the cell, refer to the foregoing content. When the network type of the serving cell and the network type of the neighboring cell of the serving cell are the same or belong to a same type group, it is determined that a control plane interface is capable of being set up between the first network device and the second network device, and the neighboring cell of the second network device for which a control plane interface is capable of being set up may be selected as the candidate cell, so that the candidate cell may be preferentially selected during cell selection or reselection. When there is a control plane interface between a network device to which the candidate cell belongs and the first network device, RRC reestablishment or RRC resume may be implemented according to the diagram of interaction shown in FIG. 4 or FIG. 6. The candidate cell is selected, so that efficiency of the terminal device in performing RRC reestablishment or RRC resume by using a selected cell is improved, and a service interruption delay is shortened.

For example, the first information may be transmitted by using an RRC message sent by the first network device to the terminal device, or may be transmitted by using information broadcast by the first network device. For example, the first information is included in a SIB broadcast by the first network device.

In some other examples, the first indication is predefined or preconfigured.

Predefined content is usually defined in a protocol, does not need to be configured by another device, and is information recorded/written in advance in hardware and/or software of the terminal device, or may be understood as information that cannot be changed by the network device or another terminal device. For example, it is specified in the protocol that a cell to which a cell identifier broadcast by the first network device belongs is used as the candidate cell in the neighboring cell of the serving cell. Therefore, after the terminal device receives a broadcast message of the first network device, and a cell identifier of one neighboring cell of the serving cell or cell identifiers of a plurality of neighboring cells of the serving cell are broadcast in the broadcast message, the terminal device may use the broadcast message as the first information and as the first indication, and use the cell to which the one cell identifier broadcast in the broadcast message belongs as a candidate cell or use the cells to which the plurality of cell identifiers broadcast in the broadcast message belong as candidate cells, and may further use a cell list to which the plurality of cell identifiers belong as the first cell list. For another example, it is specified in the protocol that a cell to which ephemeris information broadcast by the network device belongs is used as the candidate cell in the neighboring cell of the serving cell. Therefore, after the terminal device receives a broadcast message of the first network device, and ephemeris information of the serving cell and ephemeris information of one or more neighboring cells of the serving cell are broadcast in the broadcast message, the terminal device may use the broadcast message as the first information and as the ephemeris information of the serving cell and the ephemeris information of the neighboring cell of the serving cell, and use the neighboring cells as candidate cells or the first cell list.

Preconfigured content is usually information recorded/written in advance in hardware and/or software of the terminal device, is determined by a factory device vendor, and may be changed by using software or hardware. The content (pre)configured by a network may be changed by using a SIB or RRC signaling. Alternatively, the preconfigured content may be content obtained by a network side by performing configuration based on channel quality of the neighboring cell of the serving cell, a running status of the terminal device, and the like before step S801.

S802: The terminal device selects, based on the first information, the target cell for cell selection or reselection.

For example, when the first information is the first indication, the terminal device may determine the target cell based on the candidate cell indicated in the first indication.

For example, when the first information is the ephemeris information of the serving cell and the ephemeris information of the neighboring cell of the serving cell, the terminal device may select the candidate cell based on the ephemeris information of the serving cell and the ephemeris information of the neighboring cell of the serving cell. Further, when performing cell selection or reselection, the terminal device may determine the target cell based on the candidate cell.

In an implementation of this application, step S802 may include: The terminal device determines the candidate cell based on the first information, and when the candidate cell satisfies a first condition, determines that the candidate cell is the target cell.

The first condition may include that the candidate cell is detected (for example, a signal of the candidate cell is detected), a signal quality value of the candidate cell is greater than or equal to a first threshold, or the like. This is not limited herein. In this way, the candidate cell may be first determined based on the first information, and then whether the candidate cell is the target cell is determined depending on whether the candidate cell satisfies the first condition. When the candidate cell satisfies the first condition, the candidate cell is selected as the target cell. Alternatively, when the candidate cell does not satisfy the first condition, another neighboring cell is selected as the target cell. The target cell is selected based on the first condition, so that a candidate cell whose signal quality is higher than a preset threshold may be selected as the target cell. Therefore, the target cell can obtain the context of the terminal device in the serving cell, and signal quality of the terminal device in the target cell is ensured. This can improve the success rate of RRC reestablishment or RRC resume, helping improve communication quality. Alternatively, when signal quality of the candidate cell is lower than a preset threshold, another neighboring cell is selected as the target cell, so that signal quality of the terminal device in the target cell can be ensured, helping improve communication quality.

Optionally, in S803, the terminal device, the first network device, and the third network device perform RRC reestablishment or RRC resume.

The following describes step S803 separately based on the three types of the first information.

Type 1: The first information is the first indication.

If the terminal device selects the candidate cell in the first indication as the target cell when performing cell selection or reselection, when there is a control plane interface between the target cell and the serving cell, the terminal device may determine that the third network device to which the target cell belongs can set up a control plane interface with the first network device. Therefore, the terminal device, the first network device, and the third network device may complete a subsequent RRC reestablishment procedure with reference to FIG. 4 or complete a subsequent RRC resume procedure with reference to FIG. 6.

If the candidate cell in the first indication is selected as the target cell, but it cannot be determined that there is a control plane interface between the target cell and the serving cell, the terminal device cannot determine whether the third network device to which the target cell belongs can set up a control plane interface with the first network device. Therefore, the terminal device does not determine whether the third network device can obtain the context of the terminal device from the first network device. When the terminal device, the first network device, and the third network device successfully perform RRC reestablishment or RRC resume, an RRC reestablishment procedure may be completed with reference to FIG. 4, or an RRC resume procedure may be completed with reference to FIG. 6; or when the terminal device, the first network device, and the third network device fail to perform RRC reestablishment or RRC resume, an RRC reestablishment procedure may be completed with reference to FIG. 5, or an RRC resume procedure may be completed with reference to FIG. 7.

Type 2: The first information is the ephemeris information of the serving cell and the ephemeris information of the neighboring cell of the serving cell.

When performing cell selection or reselection, the terminal device may determine, based on the ephemeris information of the serving cell and the ephemeris information of the neighboring cell, whether the second network device can set up a control plane interface with the first network device, to determine whether the second network device can obtain the context of the terminal device from the first network device.

If the third network device to which the target cell selected by the terminal device in step S802 belongs can set up the control plane interface with the first network device, the terminal device may determine that the third network device can obtain the context of the terminal device from the first network device. In this case, the terminal device, the first network device, and the third network device may perform RRC reestablishment with reference to FIG. 4 or perform RRC resume with reference to FIG. 6; or if the third network device to which the target cell belongs cannot set up the control plane interface with the first network device, the terminal device, the first network device, and the second network device may perform RRC reestablishment with reference to FIG. 5 or perform RRC resume with reference to FIG. 7.

Type 3: The first information is the network type of the serving cell and the network type of the neighboring cell of the serving cell.

When the network type of the serving cell and the network type of the neighboring cell of the serving cell are the same or belong to a same type group, it is determined that the control plane interface is capable of being set up between the first network device and the second network device, and the terminal device, the first network device, and the third network device may perform RRC reestablishment with reference to FIG. 4 or perform RRC resume with reference to FIG. 6; or when the network type of the serving cell and the network type of the neighboring cell of the serving cell are different or belong to different type groups, the terminal device, the first network device, and the third network device may perform RRC reestablishment with reference to FIG. 5 or perform RRC resume with reference to FIG. 7.

It should be noted that the first information may further include another type of information used to select the target cell, and a corresponding RRC reestablishment procedure or RRC resume procedure is performed depending on whether the third network device to which the target cell belongs can set up the control plane interface with the first network device.

In the method shown in FIG. 8, the terminal device selects the target cell based on the first information when performing cell selection or reselection. Therefore, when the first information indicates the candidate cell, the candidate cell is preferentially selected for RRC reestablishment or RRC resume; or when the first information includes the ephemeris information of the serving cell and the ephemeris information of the neighboring cell, RRC reestablishment or RRC resume is performed by using the target cell determined based on the ephemeris information. In this way, cell selection or reselection efficiency of the terminal device is improved, and the service interruption delay can be shortened. This solution may be applied to selecting or reselecting, by the terminal device, a cell associated with a non-terrestrial network device.

To avoid some unnecessary control plane interface setup procedures and reduce signaling interaction between network devices, this application further provides another communication method. Refer to diagrams of interaction in communication methods shown in FIG. 9 and FIG. 10. Both the communication methods shown in FIG. 9 and FIG. 10 may be applied a step before step S803 shown in FIG. 8, before step S801, or after step S802. The communication methods shown in FIG. 9 and FIG. 10 may be another scenario in which a control plane interface is set up and are applied to a step before the control plane interface is set up, or may be another scenario in which a context of the terminal device is obtained and are applied to a step before a control plane interface is set up, which is not limited herein, for example, a scenario in which the first network device discovers a new network device or a new cell around. The embodiments in FIG. 8 to FIG. 10 may be mutually combined and referenced, and content that has been described above is not described again.

As shown in FIG. 9, the communication method includes but is not limited to the following step S901 to step S903.

S901: The terminal device sends second information to the first network device. Correspondingly, the first network device receives the second information from the terminal device.

S902: The first network device determines, based on the second information, that a control plane interface is capable of being set up between the first network device and the second network device.

S903: The first network device sends a TNL information obtaining request to the second network device.

If the first network device determines, based on the second information, that the control plane interface is incapable of being set up between the first network device and the second network device, step S903 may not be performed.

For step S903 and a subsequent step, refer to the content in step S201 to step S205. In an implementation, the second information may include a second indication indicating a device type of the first network device and a device type of the second network device. For example, the device type is one of an ascending orbit non-terrestrial network device, a descending orbit non-terrestrial network device, a low-earth orbit non-terrestrial network device, a medium-earth orbit non-terrestrial network device, a geostationary earth orbit non-terrestrial network device, and the like.

For example, the second indication indicates whether the first network device and the second network device are ascending orbit non-terrestrial network devices or descending orbit non-terrestrial network devices. In this way, if the first network device determines, based on the second indication, that both the first network device and the second network device are ascending orbit non-terrestrial network devices or both the first network device and the second network device are descending orbit non-terrestrial network devices, it is determined that the control plane interface is capable of being set up between the first network device and the second network device, and step S903 may be performed; or if the first network device determines, based on the second indication, that one of the first network device and the second network device is an ascending orbit non-terrestrial network device, and the other is a descending orbit non-terrestrial network device, it is determined that the control plane interface is incapable of being set up between the first network device and the second network device, and step S903 may not be performed.

Alternatively, the second indication indicates a network type or a type group of the serving cell and a network type or a type group of the neighboring cell. In this way, if the first network device determines, based on the second indication, that the network type of the serving cell and the network type of the neighboring cell of the serving cell are the same or belong to a same type group, step S903 is performed; or if the second indication indicates that the network type of the serving cell and the network type of the neighboring cell of the serving cell are different or belong to different type groups, the first network device may not perform step S903.

Alternatively, the second indication may also be referred to as auxiliary information, and indicates whether both the first network device and the second network device are ascending orbit non-terrestrial network devices, or indicates whether both the first network device and the second network device are descending orbit non-terrestrial network devices. Specifically, before sending the second indication, the terminal device first determines whether both the first network device and the second network device are ascending orbit non-terrestrial network devices or whether both the first network device and the second network device are descending orbit non-terrestrial network devices, and then sends the second indication to the first network device. Therefore, if the first network device determines, based on the second indication, that both the first network device and the second network device are ascending orbit non-terrestrial network devices or both the first network device and the second network device are descending orbit non-terrestrial network devices, the first network device may determine that the control plane interface is capable of being set up between the first network device and the second network device, and may perform step S903; or if the first network device determines, based on the second indication, that one of the first network device and the second network device is an ascending orbit non-terrestrial network device, and the other is a descending orbit non-terrestrial network device, it is determined that the control plane interface is incapable of being set up between the first network device and the second network device, and step S903 may not be performed.

Alternatively, the second indication indicates whether a network type of the serving cell and a network type of the neighboring cell of the serving cell are the same or belong to a same type group. Specifically, the terminal device first determines, before sending the second indication, whether the network type of the serving cell and the network type of the neighboring cell of the serving cell are the same or belong to the same type group, and then sends the second indication to the first network device. If the second indication indicates that the network type of the serving cell and the network type of the neighboring cell of the serving cell are the same or belong to the same type group, step S903 is performed; or if the second indication indicates that the network type of the serving cell and the network type of the neighboring cell of the serving cell are different or belong to different type groups, step S903 may not be performed.

Content of the second indication is not limited in this application. Optionally, the second indication may indicate that the control plane interface is capable of being set up between the first network device and the second network device, and the first network device may perform step S903 based on the second indication. If the second indication does not directly indicate that the control plane interface is capable of being set up between the first network device and the second network device, the first network device may first determine, based on the second indication, that the control plane interface is capable of being set up between the first network device and the second network device, and then determine whether to perform step S903.

It may be understood that in the foregoing example, the terminal device may determine the device type of the first network device and the device type of the second network device, and notify the first network device of a determining result by using the second indication. Alternatively, in another implementation, after the terminal device sends ephemeris information of the neighboring cell of the serving cell to the first network device, the first network device may determine, based on ephemeris information of the serving cell and the ephemeris information of the neighboring cell of the serving cell, whether both the first network device and the second network device are ascending orbit non-terrestrial network devices, or determine whether both the first network device and the second network device are descending orbit non-terrestrial network devices, to determine, depending on whether the control plane interface is capable of being set up between the first network device and the second network device, whether to perform step S903.

As shown in FIG. 9, in an implementation, the method may further include step S900: The first network device sends a measurement configuration to the terminal device. Correspondingly, the terminal device receives the measurement configuration from the first network device.

For example, the measurement configuration indicates the terminal device to measure and report signal quality of the neighboring cell.

For another example, the measurement configuration indicates to report a cell identifier of the neighboring cell of the serving cell, for example, a CGI. In this embodiment of this application, the measurement configuration indicating to report the CGI may be referred to as a CGI measurement configuration.

For another example, the first network device first sends a measurement configuration #1 to the terminal device, to indicate the terminal device to measure and report signal quality of the neighboring cell. When reporting the signal quality of the neighboring cell, the terminal device carries a cell identifier of the neighboring cell, for example, a PCI. If the first network device finds that the neighboring cell is a new neighboring cell, the first network device sends a measurement configuration #2 to the terminal device or another terminal device, to indicate to report a CGI of the neighboring cell, so that the first network device determines, by using the reported CGI of the neighboring cell, the network device to which the neighboring cell belongs.

For another example, the measurement configuration indicates to report the second information. For example, the measurement configuration includes indication information #1, used to trigger execution of step S901.

The measurement configuration may indicate the terminal device to report a measurement result based on a preset cycle, or may indicate the terminal device to report a measurement result when a measurement event is satisfied. The measurement event may include one or more of an A1 measurement event, an A2 measurement event, an A3 measurement event, an A4 measurement event, an A5 measurement event, a B1 measurement event, a B2 measurement event, and the like. A trigger condition of the A1 measurement event is that signal quality of the serving cell is higher than a first threshold. Optionally, the A1 measurement event may be used to disable a measurement function for some cells. A trigger condition of the A2 measurement event is that the signal quality of the serving cell is lower than a second threshold. Optionally, after the A2 measurement event occurs, an operation such as a handover may occur, and the A2 measurement event may be used to enable a measurement function for a cell satisfying the trigger condition. A trigger condition of the A3 measurement event is that signal quality of an intra-frequency/inter-frequency neighboring cell is higher than the signal quality of the serving cell and is higher than a third threshold. Optionally, the A3 measurement event may be used to determine whether to hand over the terminal device to the neighboring cell. A trigger condition of the A4 measurement event is that signal quality of the neighboring cell is higher than a fourth threshold. A trigger condition of the A5 measurement event is that the signal quality of the serving cell is lower than a fifth threshold, and the signal quality of the neighboring cell is higher than a sixth threshold. A trigger condition of the A6 measurement event is that the signal quality of the neighboring cell is higher than the signal quality of the serving cell by a seventh threshold. A trigger condition of the B1 measurement event is that signal quality of an inter-system neighboring cell is higher than an eighth threshold for the serving cell. A trigger condition of the B2 measurement event is that the signal quality of the serving cell is lower than a ninth threshold, and the signal quality of the inter-system neighboring cell is higher than a tenth threshold. It may be understood that the foregoing measurement event is merely an example, and the measurement event, a value of each threshold (threshold) in the measurement event, and a trigger condition for reporting a measurement result of the measurement event are not limited in this application.

In an implementation, the foregoing described embodiments shown in FIG. 8 and FIG. 9 may be implemented in combination. For example, when the first information includes the ephemeris information of the serving cell and the ephemeris information of the neighboring cell of the serving cell, step S901 may be performed after step S801, and the second information sent by the terminal device to the first network device in step S901 includes the second indication. For another example, step S901 may be performed before step S801. When performing step S901, the terminal device sends the second information to the first network device, where the second information includes the ephemeris information of the neighboring cell of the serving cell. Then, step S801 is performed, where the first network device sends the first information to the terminal device, and the first information includes the first indication.

In the method shown in FIG. 9, after the terminal device sends the second information to the first network device, the first network device may determine, based on the second information, whether the control plane interface is capable of being set up between the first network device and the second network device. When the control plane interface is capable of being set up between the first network device and the second network device, the TNL information obtaining request may be sent to the second network device, to obtain TNL information of the neighboring cell, helping complete a step of setting up the control plane interface; or when the control plane interface is incapable of being set up between the first network device and the second network device, a step of obtaining TNL information may not be performed, avoiding some unnecessary control plane interface setup procedures, and reducing signaling interaction between the network devices.

As shown in FIG. 10, the communication method includes but is not limited to the following steps.

S1001: The first network device sends a measurement configuration #1 to the terminal device. Correspondingly, the terminal device receives the measurement configuration #1 from the first network device.

S1002: The terminal device sends a PCI of the neighboring cell of the serving cell to the first network device. Correspondingly, the first network device receives the PCI of the neighboring cell of the serving cell from the terminal device.

S1003: The first network device sends a measurement configuration #2 to the terminal device. Correspondingly, the terminal device receives the measurement configuration #2 from the first network device.

S1004: The terminal device sends a CGI of the neighboring cell of the serving cell to the first network device. Correspondingly, the first network device receives the CGI of the neighboring cell of the serving cell from the terminal device.

Step S1001 to step S1004 may be optional steps. For descriptions of step S1001 and step S1004, refer to the foregoing step S900.

S1005: The first network device sends a TNL information obtaining request to the second network device.

During or after execution of step S1005, the following two manners may be included to determine whether to perform a control plane interface setup procedure.

Manner 1: The first network device sends ephemeris information of the serving cell to the second network device. Correspondingly, the second network device receives the ephemeris information of the serving cell from the first network device. The second network device determines, based on the ephemeris information of the serving cell and ephemeris information of the neighboring cell, whether a control plane interface is capable of being set up between the first network device and the second network device.

The ephemeris information of the serving cell may be carried in third information, and the third information may further include the TNL information obtaining request. In Manner 1, the ephemeris information of the serving cell may alternatively be ephemeris information of any cell of the first network device or ephemeris information corresponding to the first network device. In addition, in Manner 1, the serving cell is a cell that belongs to the first network device. For a step in which the first network device sends the third information to the second network device, refer to the descriptions of step S201 and step S202. The third information may be the first configuration in step S201 and the second configuration in step S202, and only the ephemeris information of the serving cell is added to the first configuration and the second configuration. It may be understood that the third information includes the first configuration or the second configuration, and may further include the ephemeris information of the serving cell. Optionally, the ephemeris information of the serving cell and the TNL information obtaining request may be separately sent to the second network device.

Manner 2: The second network device sends ephemeris information of the neighboring cell of the serving cell to the first network device. Correspondingly, the first network device receives the ephemeris information of the neighboring cell of the serving cell from the second network device. The first network device determines, based on ephemeris information of the serving cell and the ephemeris information of the neighboring cell, whether a control plane interface is capable of being set up between the first network device and the second network device.

In Manner 2, the serving cell is a cell in the first network device. In addition, in Manner 2, the ephemeris information of the neighboring cell of the serving cell may alternatively be ephemeris information of any cell of the second network device or ephemeris information corresponding to the second network device. For example, step S201 and step S202 are performed between the first network device and the second network device, and the second network device adds, to the third response message in S203, the ephemeris information of the any cell of the second network device or the ephemeris information corresponding to the second network device.

It may be understood that based on the ephemeris information of the serving cell and the ephemeris information of the neighboring cell, if both the first network device and the second network device are ascending orbit non-terrestrial network devices, or both the first network device and the second network device are descending orbit non-terrestrial network devices, it may be determined that the control plane interface is capable of being set up between the first network device and the second network device, to perform a procedure of setting up the control plane interface between the first network device and the second network device. For example, in Manner 1, a step in which the second network device sends TNL information to the first network device is performed (for a specific step, refer to step S203 to step 205); and in Manner 2, step S205 is performed. If one of the first network device and the second network device is an ascending orbit non-terrestrial network device, and the other is a descending orbit non-terrestrial network device, it is determined that no control plane interface is set up between the second network devices, so that a step of setting up the control plane interface is not performed. For example, in Manner 1, a step in which the second network device sends TNL information to the first network device is not performed, the first response message in step S203 does not carry TNL information of the second network device, the second response message in step S204 does not carry TNL information of the second network device, or the first response message in step S203 and the second response message in step S204 carry failure information indicating that TNL information fails to be obtained because the first network device and the second network device are not both ascending orbit non-terrestrial network devices or descending orbit non-terrestrial network devices; and in Manner 2, step S205 is not performed.

In Manner 1, the second network device determines whether the control plane interface is capable of being set up between the first network device and the second network device. In Manner 2, the first network device determines whether the control plane interface is capable of being set up between the first network device and the second network device. Whether the control plane interface is capable of being set up between the two network devices is first determined. After it is determined that the control plane interface is capable of being set up between the two network devices, the step of setting up the control plane interface between the two network devices is performed; or after it is determined that the control plane interface is incapable of being set up between the two network devices, the TNL information may not be obtained, and the control plane interface setup procedure is not triggered. In this way, some unnecessary control plane interface setup procedures can be avoided, and signaling interaction between the network devices is reduced.

The foregoing describes in detail the method in embodiments of this application, and the following provides an apparatus in embodiments of this application.

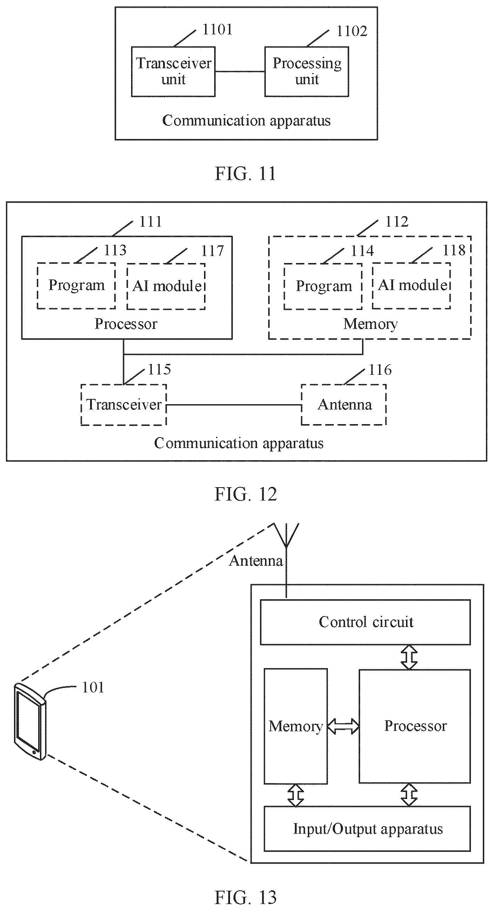

FIG. 11 is a diagram of a structure of a communication apparatus according to an embodiment of this application. The communication apparatus may include a transceiver unit 1101 and a processing unit 1102. The transceiver unit 1101 may be a signal input (receiving) or output (sending) apparatus, and is configured to perform signal transmission with another device or another component in the device.

The processing unit 1102 may be an apparatus with a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a donor node, a relay node, or a chip), execute a software program, and process data of the software program.

The communication apparatus may be used in a terminal device or a network device. Specifically, the communication apparatus may be the terminal device or the network device, or may be an apparatus, for example, a chip, used in the terminal device or the network device. The network device may be the foregoing first network device or second network device.

When the communication apparatus is used in the terminal device, the communication apparatus includes:
the processing unit 1102 is configured to: obtain first information, and select, based on the first information, a target cell for cell selection or reselection. The first information includes a first indication indicating a candidate cell for cell selection or reselection. Alternatively, the first information includes ephemeris information of a serving cell and ephemeris information of a neighboring cell of the serving cell.

In some feasible examples, the processing unit 1102 is specifically configured to: determine the candidate cell based on the first information; and when the candidate cell satisfies a first condition, determine that the candidate cell is the target cell. The first condition includes that the candidate cell is detected, or a signal quality value of the candidate cell is greater than or equal to a first threshold.

In some feasible examples, the first information is the ephemeris information of the serving cell and the ephemeris information of the neighboring cell of the serving cell. The processing unit 1102 is specifically configured to: determine, based on the ephemeris information of the serving cell, that a first network device to which the serving cell belongs is an ascending orbit non-terrestrial network device or a descending orbit non-terrestrial network device, and determine, based on the ephemeris information of the neighboring cell of the serving cell, that a second network device to which the neighboring cell of the serving cell belongs is an ascending orbit non-terrestrial network device or a descending orbit non-terrestrial network device; and if both the first network device and the second network device are ascending orbit non-terrestrial network devices, or both the first network device and the second network device are descending orbit non-terrestrial network devices, determine that the neighboring cell of the serving cell is the candidate cell.

In some feasible examples, there is a control plane interface between the candidate cell and the serving cell.

In some feasible examples, the first information is from the first network device to which the serving cell belongs, or is predefined or preconfigured.

In some feasible examples, the first indication includes at least one of the following: a first cell list, a second cell list, frequency information of the candidate cell, and indication information indicating whether there is a control plane interface between a neighboring cell of the serving cell and the serving cell. The first cell list includes the candidate cell. The second cell list includes a neighboring cell of the serving cell other than the candidate cell.

In some feasible examples, the transceiver unit 1101 is further configured to send second information to the first network device. The second information includes a second indication indicating a device type or a network type of the first network device and a device type or a network type of the second network device to which the neighboring cell of the serving cell belongs. Alternatively, the second indication indicates a network type or a type group of the serving cell and a network type or a type group of the neighboring cell. Alternatively, the second information includes the ephemeris information of the neighboring cell of the serving cell.

In some feasible examples, the transceiver unit 1101 is configured to receive a measurement configuration from the first network device, where the measurement configuration indicates to report the second information.

In some feasible examples, the measurement configuration further indicates to report a global cell identifier of the neighboring cell of the serving cell.

When the communication apparatus is used in the first network device, the communication apparatus includes:
the processing unit 1102, configured to determine first information.

The transceiver unit 1101 is configured to send the first information to a terminal device. The first information includes a first indication indicating a candidate cell for cell selection or reselection. Alternatively, the first information includes ephemeris information of a serving cell and ephemeris information of a neighboring cell of the serving cell. The serving cell belongs to the first network device.

In some feasible examples, the processing unit 1102 is further configured to perform radio resource control RRC reestablishment or RRC resume with the terminal device and a third network device. A target cell in the third network device is a cell selected by the terminal device based on the first information during cell selection or reselection.

In some feasible examples, there is a control plane interface between the candidate cell and the serving cell.

In some feasible examples, the first indication includes at least one of the following: a first cell list, a second cell list, frequency information of the candidate cell, and indication information indicating whether there is a control plane interface between a neighboring cell of the serving cell and the serving cell. The first cell list includes the candidate cell. The second cell list includes a neighboring cell of the serving cell other than the candidate cell.

In some feasible examples, the transceiver unit 1101 is further configured to receive second information from the terminal device. The second information includes a second indication indicating a device type or a network type of the first network device and a device type or a network type of a second network device to which the neighboring cell of the serving cell belongs. Alternatively, the second indication indicates a network type or a type group of the serving cell and a network type or a type group of the neighboring cell. Alternatively, the second information includes the ephemeris information of the neighboring cell of the serving cell.

The processing unit 1102 is further configured to determine, based on the second information, that a control plane interface is capable of being set up between the first network device and the second network device.

The transceiver unit 1101 is further configured to send a TNL information obtaining request to the second network device.

In some feasible examples, the transceiver unit 1101 is further configured to send a measurement configuration to the terminal device, where the measurement configuration indicates to report the second information.

In some feasible examples, the measurement configuration further indicates to report a global cell identifier of the neighboring cell of the serving cell.

Alternatively, when the communication apparatus is used in the first network device, the communication apparatus includes:
the transceiver unit 1101, configured to: send third information to a second network device to which a neighboring cell of a serving cell belongs, where the third information includes a TNL information obtaining request and ephemeris information of the serving cell, and the serving cell belongs to the first network device; and receive TNL information from the second network device.

Alternatively, the communication apparatus includes:
the transceiver unit 1101, configured to: send a TNL information obtaining request to a second network device to which a neighboring cell of a serving cell belongs; and receive ephemeris information and TNL information from the second network device; and
the processing unit 1102, configured to determine, based on ephemeris information of the serving cell and ephemeris information of the neighboring cell of the serving cell, that both the first network device and the second network device are ascending orbit non-terrestrial network devices or both the first network device and the second network device are descending orbit non-terrestrial network devices.

When the communication apparatus is used in the second network device, the communication apparatus includes:
the transceiver unit 1101, configured to receive third information from a first network device to which a serving cell belongs, where the third information includes a TNL information obtaining request and ephemeris information of the serving cell;
the processing unit 1102, configured to determine, based on the ephemeris information of the serving cell and ephemeris information of a neighboring cell of the serving cell, that both the first network device and the second network device are ascending orbit non-terrestrial network devices or both the first network device and the second network device are descending orbit non-terrestrial network devices; and
the transceiver unit 1101, further configured to send TNL information of the second network device to the first network device.

Alternatively, the communication apparatus includes:
the transceiver unit 1101, configured to: receive a TNL information obtaining request from a first network device to which a serving cell belongs; and send ephemeris information and TNL information of the second network device to the first network device.

For implementation of the transceiver unit 1101 and the processing unit 1102, refer to the related descriptions of the method embodiment shown in FIG. 8, FIG. 9, or FIG. 10. Details are not described herein again.

FIG. 12 is a diagram of a structure of another communication apparatus according to an embodiment of this application. It may be understood that the communication apparatus includes forms such as modules, units, elements, circuits, or interfaces, which are appropriately configured together to implement the solution. The communication apparatus may be a RAN node, a terminal, a core network device, or another network device, or may be a part (for example, a chip) in these devices, and is configured to implement the method described in the method embodiment.

As shown in FIG. 12, the communication apparatus may include one or more processors 111. The processor 111 may also be referred to as a processing unit, and can implement a specific control function. The processor 111 may be a general-purpose processor, a dedicated processor, or the like, for example, may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

In an optional design, the processor 111 may include a program 113 (which may also be referred to as code or instructions sometimes). The program 113 may be run on the processor 111, so that the communication apparatus performs the method described in the method embodiment.

In another optional design, the processor 111 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus may include a circuit, and the circuit can implement the sending, receiving, or communication function in the foregoing method embodiment.

Optionally, the communication apparatus may include one or more memories 112 having a program 114 (which may also be referred to as code or instructions sometimes) stored thereon. The program 114 may be run on the processor 111, so that the communication apparatus performs the method described in the foregoing method embodiment.

Optionally, the processor 111 may include an AI module 117, and/or the memory 112 may include an AI module 118. The AI module is configured to implement an AI-related function. The AI module may be implemented by using software, hardware, or a combination of software and hardware. For example, the AI module may include a RIC module. For another example, the AI module may be a near-real-time RIC or a non-real-time RIC.

Optionally, the processor 111 and/or the memory 112 may further store data. The processor and the memory may be separately disposed, or may be integrated. For example, a correspondence described in the method embodiment may be stored in the memory or stored in the processor.

Optionally, the communication apparatus may further include a transceiver 115 and/or an antenna 116. The processor 111 may also be sometimes referred to as a processing unit, and controls the communication apparatus (for example, the RAN node or the terminal). The transceiver 115 may also be referred to as a transceiver unit, a transceiver machine, a transceiver circuit, a transceiver, or the like, and is configured to implement the receiving and sending functions of the communication apparatus via the antenna 116.

Optionally, the communication apparatus may be configured to perform any method described in FIG. 8, FIG. 9, or FIG. 10 in embodiments of this application.

In an implementation, the communication apparatus may be a terminal device, an apparatus in a terminal device, or an apparatus that can be used together with a terminal device. When computer program instructions stored in the memory 112 are executed, the processor 111 is configured to perform an operation performed by the processing unit 1102 in the foregoing embodiment. The transceiver 115 is configured to perform an operation performed by the transceiver unit 1101 in the foregoing embodiment. The transceiver 115 is further configured to send information to another communication apparatus other than the communication apparatus. The terminal device or the apparatus in the terminal device may be further configured to perform any method performed by the terminal device in the method embodiment in FIG. 8, FIG. 9, or FIG. 10. Details are not described herein again.

In an embodiment, the communication apparatus may be a network device, an apparatus in a network device, or an apparatus that can be used together with a network device. When computer program instructions stored in the memory 112 are executed, the processor 111 is configured to control the transceiver 115 to perform an operation performed by the transceiver unit 1101 in the foregoing embodiment. The transceiver 115 is further configured to receive information from another communication apparatus other than the communication apparatus. The network device or the apparatus in the network device may be further configured to perform any method performed by the network device in the method embodiment in FIG. 8, FIG. 9, or FIG. 10. Details are not described herein again.

The processor and the transceiver described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, and the like.

The communication apparatus described in the foregoing embodiment may be the network device or the terminal device. However, a scope of the apparatus described in this application is not limited thereto, and the structure of the communication apparatus may not be limited by FIG. 12. The apparatus may be an independent device, or may be a part of a large device. For example, the communication apparatus may be:
(1) an independent integrated circuit IC, a chip, or a chip system or subsystem;
(2) a set of one or more ICs, where optionally, the IC set may include a storage part configured to store data and/or instructions;
(3) an ASIC, for example, a modem (MSM);
(4) a module that can be embedded in another device; and
(5) the foregoing terminal device or network device.

FIG. 13 is a diagram of a structure of a terminal device according to an embodiment of this application. For ease of description, FIG. 13 shows only main components of the terminal device. As shown in FIG. 13, the terminal device 101 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user, and output data to the user.

After the terminal device is powered on, the processor may read the software program in the storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in a form of an electromagnetic wave via the antenna. When data is sent to the terminal device, the radio frequency circuit receives a radio frequency signal via the antenna. The radio frequency signal is further converted into a baseband signal, and the baseband signal is output to the processor. The processor converts the baseband signal into data, and processes the data.

For ease of description, FIG. 13 shows only one memory and one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 13 integrates functions of the baseband processor and the central processing unit. A person skilled in the art may understand that the baseband processor and the central processing unit may be processors independent of each other, and are connected to each other by using a technology like a bus. A person skilled in the art may understand that the terminal device may include a plurality of baseband processors to adapt to different network standards, and the terminal device may include a plurality of central processing units to enhance a processing capability of the terminal device. The components of the terminal device may be connected by using various buses. The baseband processor may also be referred to as a baseband processing circuit or a baseband processing chip. The central processing unit may also be referred to as a central processing circuit or a central processing chip. A function of processing the communication protocol and the communication data may be built in the processor, or may be stored in the storage unit in a form of the software program, and the processor executes the software program to implement a baseband processing function.

In an example, the antenna and the control circuit that have receiving and sending functions may be considered as a transceiver unit of the terminal device 101, and the processor having a processing function may be considered as a processing unit of the terminal device 101. The transceiver unit may also be referred to as a transceiver, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. For example, the receiving unit may also be referred to as a receiver machine, a receiver, a receiving circuit, or the like, and the sending unit may also be referred to as a transmitter machine, a transmitter, a transmitting circuit, or the like. Optionally, the receiving unit and the sending unit may be one integrated unit, or may be a plurality of independent units. The receiving unit and the sending unit may be at one geographical location, or may be distributed at a plurality of geographical locations.

In an embodiment, the transceiver unit is configured to perform an operation performed by the transceiver unit 1101 in the foregoing embodiment. The processing unit is configured to perform an operation performed by the processing unit 1102 in the foregoing embodiment. The terminal device 101 may be further configured to perform any method performed by the terminal device in the method embodiment in FIG. 8, FIG. 9, or FIG. 10. Details are not described herein again.

An embodiment of this application further provides a computer-readable storage medium. The computer-readable storage medium stores a computer program. When the program is executed by a processor, a procedure related to the terminal device or the network device in the communication method provided in the foregoing method embodiment may be implemented.

An embodiment of this application further provides a computer program product. When the computer program product is run on a computer or a processor, the computer or the processor is enabled to perform one or more steps in any one of the foregoing communication methods. When each component module of the foregoing device is implemented in a form of a software functional unit and sold or used as an independent product, the component module may be stored in a computer-readable storage medium.

An embodiment of this application provides a chip, including a processor, configured to: invoke, from a memory, instructions stored in the memory and run the instructions, to enable a communication apparatus on which the chip is installed to perform any one of the foregoing methods.

An embodiment of this application further provides another chip, including an input interface, an output interface, and a processing circuit. The input interface, the output interface, and the circuit are connected by using an internal connection path. The processing circuit is configured to perform any one of the foregoing methods. Optionally, the chip further includes a memory. The input interface, the output interface, a processor, and the memory are connected by using the internal connection path. The processor is configured to execute code in the memory. When the code is executed, the processor is configured to perform the any one of the foregoing methods.

An embodiment of this application further provides a chip system, including at least one processor and a communication interface. The communication interface and the at least one processor are interconnected by using a line. The at least one processor is configured to run a computer program or instructions, to perform any one of the foregoing methods. The chip system may include a chip, or may include a chip and another discrete component.

An embodiment of this application further provides a communication system. The system includes a terminal device and a network device. For specific descriptions, refer to any method shown in FIG. 8, FIG. 9, or FIG. 10.

The network device may include a first network device to which a serving cell belongs, a second network device to which a neighboring cell of the serving cell belongs, a network device to which a target cell belongs, and the like.

An embodiment of this application further provides another communication system. The system includes a first network device and a second network device. For specific descriptions, refer to the method shown in FIG. 10.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

A person of ordinary skill in the art may be aware that units and algorithm steps in the examples described with reference to embodiments provided in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The steps of the method in embodiments of this application may be rearranged, combined, or deleted based on an actual requirement. Steps in each embodiment may be partially performed (for example, the terminal device may not perform the steps performed by the terminal device in the foregoing embodiments). An execution sequence of different steps can be changed. Embodiments described in this specification may be combined with other embodiments, different embodiments may be combined with each other, and different steps of different embodiments in this specification may be combined.

The modules/units in the apparatuses in embodiments of this application may be combined, divided, and deleted based on an actual requirement.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment.

In this application, the communication protocol may be a communication protocol or a specification, for example, a 3GPP communication protocol.

Terms "first", "second", "third", "fourth", and the like (if any) in embodiments of this application are used to distinguish between similar objects, but not necessarily describe a specific order or sequence.

In embodiments of this application, "include" may indicate an inclusion relationship, or an equal relationship. For example, if A includes B, A may include other content in addition to B, or A and B are the same content.

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

## Claims

1. A communication method, applied to a terminal device and comprising:
obtaining first information; and
selecting, based on the first information, a target cell for cell selection or reselection, wherein
the first information comprises a first indication, and the first indication indicates a candidate cell for cell selection or reselection; or the first information comprises ephemeris information of a serving cell and ephemeris information of a neighboring cell of the serving cell.

2. The method according to claim 1, wherein selecting, based on the first information, the target cell for cell selection or reselection comprises:
determining the candidate cell based on the first information; and
when the candidate cell satisfies a first condition, determining that the candidate cell is the target cell, wherein the first condition comprises that the candidate cell is detected, or a signal quality value of the candidate cell is greater than or equal to a first threshold.

3. The method according to claim 2, wherein the first information is the ephemeris information of the serving cell and the ephemeris information of the neighboring cell of the serving cell, and determining the candidate cell based on the first information comprises:
determining, based on the ephemeris information of the serving cell, that a first network device to which the serving cell belongs is an ascending orbit non-terrestrial network device or a descending orbit non-terrestrial network device, and determining, based on the ephemeris information of the neighboring cell of the serving cell, that a second network device to which the neighboring cell of the serving cell belongs is an ascending orbit non-terrestrial network device or a descending orbit non-terrestrial network device; and
if both the first network device and the second network device are ascending orbit non-terrestrial network devices, or both the first network device and the second network device are descending orbit non-terrestrial network devices, determining that the neighboring cell of the serving cell is the candidate cell.

4. The method according to any one of claims 1 to 3, wherein there is a control plane interface between the candidate cell and the serving cell.

5. The method according to any one of claims 1 to 4, wherein the first indication comprises at least one of the following: a first cell list, a second cell list, frequency information of the candidate cell, and indication information indicating whether there is a control plane interface between a neighboring cell of the serving cell and the serving cell, wherein the first cell list comprises the candidate cell, and the second cell list comprises a neighboring cell of the serving cell other than the candidate cell.

6. The method according to any one of claims 1 to 5, wherein the first information is from the first network device to which the serving cell belongs, or is predefined or preconfigured.

7. The method according to any one of claims 1 to 6, further comprising:
sending second information to the first network device to which the serving cell belongs, wherein the second information comprises a second indication, and the second indication indicates a device type of the first network device and a device type of the second network device to which the neighboring cell of the serving cell belongs; or the second information comprises the ephemeris information of the neighboring cell of the serving cell.

8. The method according to claim 7, further comprising:
receiving a measurement configuration from the first network device, wherein the measurement configuration indicates to report the second information.

9. The method according to claim 8, wherein the measurement configuration further indicates to report a global cell identifier of the neighboring cell of the serving cell.

10. A communication method, applied to a first network device and comprising:
determining first information; and
sending the first information to a terminal device, wherein
the first information comprises a first indication, and the first indication indicates a candidate cell for cell selection or reselection; or the first information comprises ephemeris information of a serving cell and ephemeris information of a neighboring cell of the serving cell; and the serving cell belongs to the first network device.

11. The method according to claim 10, further comprising:
performing radio resource control RRC reestablishment or RRC resume with the terminal device and a third network device, wherein a target cell in the third network device is a cell selected by the terminal device based on the first information.

12. The method according to claim 10 or 11, wherein there is a control plane interface between the candidate cell and the serving cell.

13. The method according to claim 10 or 11, wherein the first indication comprises at least one of the following: a first cell list, a second cell list, frequency information of the candidate cell, and indication information indicating whether there is a control plane interface between a neighboring cell of the serving cell and the serving cell, wherein the first cell list comprises the candidate cell, and the second cell list comprises a neighboring cell of the serving cell other than the candidate cell.

14. The method according to any one of claims 10 to 13, further comprising:
receiving second information from the terminal device, wherein the second information comprises a second indication, and the second indication indicates a device type of the first network device and a device type of a second network device to which the neighboring cell of the serving cell belongs; or the second information comprises the ephemeris information of the neighboring cell of the serving cell;
determining, based on the second information, that a control plane interface is capable of being set up between the first network device and the second network device; and
sending a transport network layer TNL information obtaining request to the second network device.

15. The method according to claim 14, further comprising:
sending a measurement configuration to the terminal device, wherein the measurement configuration indicates to report the second information.

16. The method according to claim 15, wherein the measurement configuration further indicates to report a global cell identifier of the neighboring cell of the serving cell.

17. A communication apparatus, comprising a corresponding unit configured to perform the method according to any one of claims 1 to 9, or comprising a corresponding unit configured to perform the method according to any one of claims 10 to 16.

18. A communication apparatus, wherein the communication apparatus comprises a processor and a storage medium, the storage medium stores instructions, and when the instructions are run by the processor, the method according to any one of claims 1 to 9 is implemented, or the method according to any one of claims 10 to 16 is implemented.

19. A computer-readable storage medium, wherein the computer-readable storage medium comprises instructions, and when the instructions are run by a processor, the method according to any one of claims 1 to 9 is implemented, or the method according to any one of claims 10 to 16 is implemented.

20. A communication method, wherein the communication method comprises the method according to any one of claims 1 to 9 and the method according to any one of claims 10 to 16.

21. A communication system, wherein the communication system comprises a terminal device and a first network device, the terminal device is configured to perform the method according to any one of claims 1 to 9, and the first network device is configured to perform the method according to any one of claims 10 to 16.
